# EUROPEAN PATENT APPLICATION

(11) **EP 4 703 176 A1**
(43) Date of publication of application: **04.03.2026**
(21) Application number: 23963238.3
(22) Date of filing: 26.12.2023
(51) Int. Cl.: B60K 35/55, B60K 35/60, B60K 35/65, B60K 35/22, B60K 35/80

(54) **VEHICLE DISPLAY DEVICE HAVING MULTIPLE DISPLAYS AND OPERATION METHOD THEREOF**

(71) Applicant: LG Electronics Inc., Yeongdeungpo-gu Seoul 07336 (KR)
(72) Inventor: CHO, Sungil, Seoul 06772 (KR); CHOO, Zhimin, Seoul 06772 (KR); CHO, Jaehoon, Seoul 06772 (KR)
(74) Representative: Vossius & Partner Patentanwälte Rechtsanwälte mbB
(86) International application number: PCT/KR2023/021562
(87) International publication number: WO 2025/143273

(57) **Abstract**

A vehicle display device and an operation method thereof are disclosed. The vehicle display device according to an embodiment of the present invention comprises: a main body mountable on a dashboard of a vehicle; a communication unit which receives driving information of the vehicle collected by a sensor of the vehicle; multiple displays which are formed on the front surface of the main body, and include a first display unit, a second display unit provided so that the display direction is variable, and a third display unit provided so that the display screen size is variable; and a control unit which generates a control signal for changing the shapes of at least some of the first to third display units so that the multiple displays have variable form factors. The control unit may recognize the display direction of the second display unit, which forms a form factor of the multiple displays, and may determine whether a portion of the second display unit overlaps with at least one of the first and third display units, and operates to control display balancing accordingly to display a screen corresponding to the driving information.

## Description

### Technical Field

The present disclosure relates to a vehicular display device including a plurality of displays and a method of operating the vehicular display device and, more particularly, to a vehicular display device including a plurality of devices that vary according to a situation and a method of operating the vehicular display device.

### Background Art

Vehicles are apparatuses that move in a direction desired by an occupant. An automobile is a representative example of such a vehicle.

A trend has emerged in which vehicles are equipped with various sensors, electronic devices, and equivalents thereof to improve user convenience. Particularly, to enhance user convenience, extensive research has been conducted on Advanced Driver Assistance Systems (ADAS). Moreover, research directed to autonomous vehicles has actively progressed.

The term "autonomous driving" refers to a system in which the vehicle is capable of determining driving behavior and operating without input from the occupant. This autonomous driving may be categorized into progressive stages ranging from non-automation to full automation, depending on the degree to which the system is involved in driving and the extent to which the driver controls the vehicle.

Autonomous driving of vehicles has transformed the perception of vehicles from being merely a means of transportation to being a space where one can dwell. Moreover, a trend has emerged in which displays of ever-increasing size are mounted in vehicles to allow users to enjoy various infotainment content. There is a need to design large-sized display devices that, when mounted, satisfy the usability of an infotainment system without obstructing the driver's field of view.

### Disclosure of Invention

### Technical Problem

Objects of the present disclosure are to address the above-mentioned issue and other related issues.

One object of some embodiments of the present disclosure is to provide a vehicular display device including a plurality of displays having a variable form factor, thereby enhancing the usability of an infotainment system on a per-situation basis while securing a driver's field of view, and a method of operating the vehicular display device.

Another object of some embodiments of the present disclosure is to provide a vehicular display device including a plurality of displays that are transformable into an optimal form in accordance with a driving situation of a vehicle, the needs of an occupant in the vehicle, and provided content or services, and a method of operating the vehicular display device.

Still another object of some embodiments of the present disclosure is to provide a vehicular display device capable of recognizing the occurrence of overlap among a plurality of displays due to a form factor transition and of performing seamless display expansion, and a method of operating the vehicular display device.

### Solution to the Problem

To accomplish the above-mentioned objects, a vehicular display device according to an embodiment of the present disclosure, and a method of operating the vehicular display device, can drive one of a plurality of displays, including at least a flexible display panel, in either a portrait mode or a landscape mode, and can display an expanded screen while taking into consideration an overlapping region to be formed on another display in the landscape mode, and a method of operating the vehicular display device.

According to an aspect of an embodiment of the present disclosure, there is provided a vehicular display device including: a main body mountable on a dashboard of a vehicle; a communication unit that receives vehicle driving information collected by a sensor of the vehicle; a plurality of displays, formed on a front surface of the main body, that include a first display, a second display whose display has a variable direction, and a third display whose display has a variable screen size; and a control unit that changes a form of at least one of the following: the first display, the second display, or the third display, in such a manner that a form factor of the plurality of displays varies. The control unit recognizes the display direction of the second display that forms the form factor of the plurality of displays, determines, based on the display direction of the second display, whether the second display is to overlap at least one of the following: the first display or the third display, and displays a screen corresponding to the vehicle driving information on at least one of the plurality of displays by controlling display balance for at least one of the following: the first display or the third display, on the basis of the determination.

According to an embodiment, in the vehicular display device, the second display may be configured to undergo relative rotation with respect to the main body in response to a control signal from the control unit, thereby changing the display direction in accordance with an operation mode corresponding to either a landscape mode or a portrait mode. Furthermore, when a control signal for changing the form of at least one of the following: the first display, the second display, or the third display may be generated, the control unit may store, in a memory, information about an operation mode corresponding to the display direction of the second display that forms the form factor of the plurality of displays.

According to an embodiment, in the vehicular display device, when an operation mode of the second display corresponds to the portrait mode, the control unit may determine that one portion of the second display does not overlap the first display and the second display. Furthermore, when the operation mode of the second display corresponds to the landscape mode, the control unit may determine that one portion of the second display overlaps at least one of the following: the first display or the third display, and may control display balance for an overlapping region, resulting from the overlap.

According to an embodiment, in the vehicular display device, in a form factor in which the second display is positioned in the landscape mode, the control unit may control switching to a deactivated state in such a manner that a content screen is not displayed on overlapping regions of the first and third displays, which are caused by the second display.

According to an embodiment, in the vehicular display device, the control unit may perform control in such a manner that a screen corresponding to the vehicle driving information is displayed in an expanded format on at least one of the following: the first display or the second display, excluding the overlapping region thereof, and on the second display.

According to an embodiment, in the vehicular display device, the control unit may determine, based on a driving situation detected on the basis of the vehicle driving information, whether the display direction of the second display is to be changed, thereby varying the form factor, and the control unit may determine whether overlapping regions are to be formed on the first display and the third display, respectively, by recognizing the display direction of the second display based on the determination.

According to an embodiment, in the vehicular display device, the detected driving situation may be either a lane change or parking operation of the vehicle, each of which is predicted on the basis of the received vehicle driving information. Furthermore, the control unit may perform display balance for the first display and the third display in such a manner that information associated with the detected driving situation is displayed in display regions thereof instead of the overlapping regions.

According to an embodiment, in the vehicular display device, the control unit may determine not to change the display direction of the second display based on a lane change predicted from the detected driving situation, and may control the display of a guide screen for the lane change, taking into consideration the overlapping regions of the first display and the third display, the overlapping regions being to be formed in response to the current display direction of the second display.

According to an embodiment, in the vehicular display device, on the basis of the vehicle driving information, the control unit may recognize a driving lane and a target lane that correspond to the current location of the vehicle, and, based on the current display direction of the second display, the control unit may determine whether to expand the guide screen to at least one of the following: the first display or the third display.

According to an embodiment, in the vehicular display device, in the state of the form factor in which the second display is positioned in a portrait mode, the control unit may determine that the guide screen is to be expanded up to either the first display or the third display, each of which is positioned in a direction aligned with the target lane. Furthermore, the control unit may perform display balance in such a manner that the expanded guide screen is displayed as one screen including the driving lane and the target lane, which are connected to each other.

According to an embodiment, in the vehicular display device, in a state of the form factor in which the second display is positioned in a landscape mode, by further considering information about a distance between the driving lane and the target lane, the control unit may determine whether to expand the guide screen to at least one of the following: the first display or the third display.

According to an embodiment, in the vehicular display device, in the state of the form factor in which the second display is positioned in the landscape mode, when the distance between the driving lane and the target lane falls within a preset range, the control unit may display the guide screen on the second display. Furthermore, when the distance between the driving lane and the target lane exceeds the preset range, the control unit may determine that the guide lane is to be expanded up to the display positioned in a direction corresponding to the target lane.

According to an embodiment, in the vehicular display device, when it is recognized, based on the detected driving situation, that the vehicle is being parked, the control unit may select a parking mode corresponding to an available parking space on the basis of the vehicle driving information, and may determine whether to change the display direction of the second display, by recognizing the display direction of the second display that forms the form factor of the plurality of displays.

According to an embodiment, in the vehicular display device, in a case where the parking mode corresponds to a horizontal parking mode, the control unit may control the second display to form a form factor for a portrait mode, and may control the display of a guide screen for horizontal parking on the second display.

According to an embodiment, in the vehicular display device, in a case where the parking mode corresponds to a vertical parking mode, the control unit may control the second display to form a form factor for a landscape mode, may display a guide screen for horizontal parking on the second display, and may perform display balance in such a manner that related content is displayed on the first display and the second display, except for the overlapping regions thereof that overlap with second display.

According to an embodiment, in the vehicular display device, the second display may be structurally configured to undergo relative movement in a horizontal direction in a form factor state for a landscape mode, in response to a control signal. Furthermore, during display expansion of a screen corresponding to the vehicle driving information, the control unit may recognize a state of a form factor in which the second display is positioned in the landscape, and may transfer, to the second display, a control signal for enabling the second display to undergo relative movement in the horizontal direction in such a manner as not to overlap at least one of the following: the first display or the third display.

According to an embodiment, in the vehicular display device, the control unit may select an expansion direction of a display based on the vehicle driving information, may transfer, to the second display, a first control signal for causing relative movement of the second display in a direction opposite to the selected expansion direction, and may control the display of an expanded screen after driving the second display.

According to an embodiment, in the vehicular display device, in response to a control signal, the first display and the third display each are configured to undergo relative movement in a vertical direction, thereby changing exposure areas of displays thereof and varying screen sizes of the displays. Furthermore, the control unit may transfer a second control signal for causing relative movement in the vertical direction of either the first display or the third display, each of which corresponds to the expansion direction of the second display, after driving the second display in response to the first control signal. Furthermore, the control unit may display the expanded screen seamlessly across the second display after driving the first display or the third display, each of which corresponds to the expansion direction of the display.

### Advantageous Effects of Invention

In a vehicular display device according to an embodiment and a method of operating the vehicular display device, a form factor of a plurality of displays is changed into an optimal form in accordance with a driving situation of a vehicle, the needs of an occupant, and provided content or services. As a result, the driver's field of view can be ensured, and the usability of an infotainment system can be improved under various conditions.

In addition, in the vehicular display device according to an embodiment and the method of operating the vehicular display device, the form factor varies depending on the current driving mode of the vehicle, thereby providing an experience in which related content or services are delivered in an efficient and seamless format.

In addition, in the vehicular display device according to an embodiment and the method of operating the vehicular display device, an occupant in the front passenger seat does not need to request a display operation separately, and the driver and the occupant can operate their respective devices in conjunction with each other without causing interference.

Moreover, in the vehicular display device according to an embodiment and the method of operating the vehicular display device, in a case where a form factor transition causes overlap to occur among a plurality of displays, the occurrence of overlap can be immediately recognized, and seamless display expansion can be achieved through a change in structural form and through display balance.

### Brief Description of Drawings

FIG. 1 is an exemplary block diagram that is referenced to describe the configuration of a vehicle for explaining the configuration of a vehicle associated with the present disclosure.
FIG. 2A is an exemplary view illustrating that a vehicular display device according to the present disclosure is mounted in the vehicle.
FIG. 2B is an exemplary diagram that is referenced to describe the detailed configuration of the vehicular display device according to the present disclosure.
FIGS. 2C and 2D are views that are referenced to describe one display that is vertically movable and has a structure in which one portion thereof outwardly extends, according to the present disclosure.
FIGS. 3 and 4 are views that are referenced to describe an example where a second display is configured for either a first form factor or a second form factor in the vehicular display device according to the present disclosure.
FIG. 5 is an exemplary view that is referenced to describe a form factor transition caused by a change in the size of a third display in the vehicular display device according to the present disclosure.
FIG. 6 is a view that is referenced to describe a form factor transition for changing the display direction of a second display in the vehicular display device according to the present disclosure. FIG. 7 is an exemplary view that is referenced to describe a form factor transition for additionally varying the size of the third display in FIG. 6.
FIG. 8 is a representative flowchart that is referenced to describe a method of operating the vehicular display device that determines, based on recognition of the form factor of a plurality of displays, whether overlap is to occur between the displays, according to the present disclosure.
FIGS. 9A and 9B are views that are referenced to describe a situation in which, in a case where the second display forms form factors for a portrait mode and a landscape mode in the vehicular display device according to the present disclosure, the second display overlaps another display.
FIGS. 10, 11A, and 11B are a flowchart, a conceptual diagram, and a conceptual diagram, respectively, that are referenced to describe a method of displaying a guide screen for a lane change in accordance with a form factor of the second display during the lane change in the vehicular display device according to the present disclosure.
FIGS. 12, 13A, and 13B are a flowchart, a conceptual diagram, and a conceptual diagram, respectively, that are referenced to describe a method of determining whether to change the form factor of the second display in accordance with a parking mode when parking the vehicle and of displaying a parking guide screen corresponding to a selected parking mode.
FIG. 14 is a flowchart that is referenced to describe a method of further driving the second display depending on the current form factor of the second display and whether to display content in an expanded manner, and a method of displaying content in the vehicular display device according to the present disclosure.
FIGS. 15A, 15B, 16A, and 16B are conceptual diagrams illustrating various embodiments in which content is expanded and displayed without causing overlap between the displays in the vehicular display device according to the present disclosure.

### Mode for the Invention

Embodiments disclosed in the present specification will be described in detail below with reference to the accompanying drawings. The same reference numerals are used for the same or similar constituent elements, regardless of figure numbers, and redundant descriptions thereof are not repeated. The terms 'module' and 'unit' are hereinafter used interchangeably to name constituent elements solely for convenience of description in the present specification. These terms are not intended to have different meanings or to indicate different functions. In addition, in describing the embodiments disclosed in the present specification, detailed descriptions of well-known related technologies may be omitted when such descriptions are deemed to obscure the nature and gist of the present disclosure. In addition, the accompanying drawings are merely provided to facilitate understanding of the embodiments disclosed in the present specification and shall not be construed as limiting the technical idea disclosed in the present specification. Furthermore, any modifications, equivalents, or substitutions of constituent elements, to the extent falling within the technical scope of the present disclosure, are intended to be encompassed within the scope of the present disclosure.

The ordinal numbers first, second, and so forth may be used to describe various elements, but they do not limit these elements. These terms are used merely to distinguish among constituent elements having similar functions.

It should be understood that a constituent element, when referred to as 'being connected to' or 'having access to' a different constituent element, may be directly connected to or have direct access to the different constituent element, or may be indirectly connected to or have access to the different constituent element through one or more intermediate constituent elements. Likewise, it should be understood that, when a constituent element is described as being 'connected to' or 'having access to' another constituent element, such connection or access may be direct without the need for one or more intermediary constituent elements.

A noun in singular form, unless clearly indicated otherwise by the context, shall be understood to include the plural form.

The terms 'include,' 'have,' and equivalent expressions, as used in the present application, shall be understood to indicate the presence of a feature, number, step, operation, constituent element, component, or combination thereof, without precluding the possibility of the presence or addition of one or more other features, numbers, steps, operations, constituent elements, components, or combinations thereof.

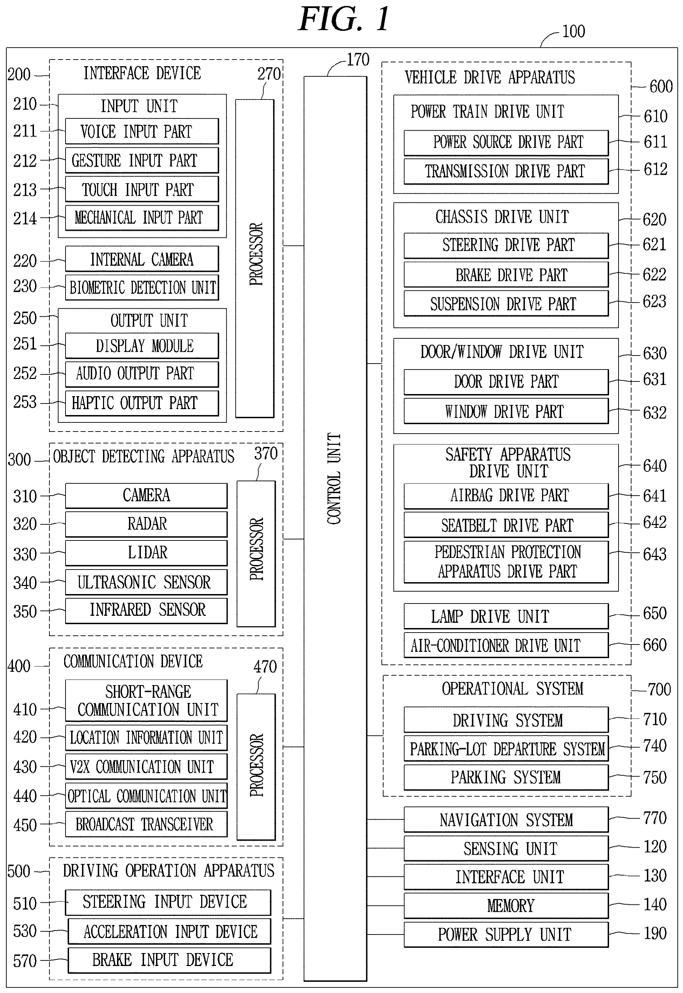

FIG. 1 is an exemplary block diagram that is referenced to describe the configuration of a vehicle for describing a vehicle in accordance with the present disclosure.

With reference to FIG. 1, a vehicle 100 may include wheels that are rotated by a power source and a steering input apparatus 510 for adjusting the driving direction of the vehicle 100.

The vehicle 100 may be an autonomous driving vehicle. The vehicle 100 may switch to an autonomous driving mode or a manual mode on the basis of a user input. For example, the vehicle 100 may switch from the manual mode to the autonomous driving mode or from the autonomous driving mode to the manual mode on the basis of a user input received through a user interface device 200 (hereinafter referred to as a 'user terminal').

The vehicle 100 may switch to the autonomous driving mode or the manual mode on the basis of driving situation information. The driving situation information may be generated on the basis of object information provided by an object detection device 300. For example, the vehicle 100 may switch from the manual mode to the autonomous driving mode or from the autonomous driving mode to the manual mode on the basis of the driving situation information generated by the object detection device 300. For example, the vehicle 100 may switch from the manual mode to the autonomous driving mode or from the autonomous driving mode to the manual mode on the basis of the driving situation information received through a communication device 400.

The vehicle 100 may switch from the manual mode into the autonomous driving mode or from the autonomous driving mode to the manual mode on the basis of information, data, signals, all of which are provided by an external device.

In a case where the vehicle 100, which is an autonomous driving vehicle, may be driven in the autonomous driving mode, the vehicle 100 may be driven through the use of an operational system 700. For example, the autonomous driving vehicle 100 may be driven on the basis of information, data, and signals, all of which are generated by a driving system 710, a parking-lot departure system 740, and a parking system 750.

In a case where the vehicle 100, which is an autonomous driving vehicle, is driven in the manual mode, the vehicle 100 may receive a user input for driving through a driving operation apparatus 500. The vehicle 100 may be driven on the basis of the user input received through the driving operation apparatus 500.

The vehicle 100 may include the user interface device 200, the object detection devices 300, the communication device 400, the driving operation apparatus 500, a vehicle driving apparatus 600, the operational system 700, a navigation system 770, a vehicular interface unit 130, a memory 140, and a control unit 170, and a power supply unit 190.

According to an embodiment, the vehicle 100 may further include one or more constituent elements in addition to the constituent elements described in the present specification or may omit one or more of the described constituent elements.

The user interface device 200 is a device for communication between the vehicle 100 and the user. The user interface device 200 may receive a user input and may provide information, generated by the vehicle 100, to the user. The vehicle 100 may provide a user interface (UI) or user experience (UX) through the user interface device (hereinafter referred to as the 'user terminal') 200.

The user interface device 200 may include an input unit 210, an internal camera 220, a biometric detection unit 230, an output unit 250, and a processor 270. According to an embodiment, the user interface device 200 may further include one or more constituent elements in addition to the constituent elements described in the present specification or may omit one or more of the described constituent elements.

The input unit 210 serves to receive information as input from the user. The processor 270 may analyze data collected through the input unit 210 and may convert the data into a control command of the user.

The input unit 210 may be arranged within the vehicle 100. For example, the input unit 210 may be arranged in one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electrical signal. The electrical signal, resulting from the conversion, may be provided to the processor 270 or the control unit 170. The voice input part 211 may include at least one microphone.

The gesture input part 212 may convert a user's gesture input into an electrical signal. The electrical signal, resulting from the conversion, may be provided to the processor 270 or the control unit 170.

The gesture input part 212 may include at least one of the following: an infrared sensor or an image sensor, each of which serves to detect the user's gesture input. According to an embodiment, the gesture input part 212 may detect a user's three-dimensional (3D) gesture input. To this end, the gesture input part 212 may include a plurality of light-emitting units that emit a plurality of infrared rays, or a plurality of image sensors.

The gesture input part 212 may detect the user's 3D gesture input through a time-of-flight (TOF) method, a structured light method, or a disparity method.

The touch input part 213 may convert the user's touch input into an electrical signal. The electrical signal, resulting from the conversion, may be provided to the processor 270 or the control unit 170.

The touch input part 213 may include a touch sensor for detecting the user's touch input. According to an embodiment, the touch input part 213 may be integrally formed with a display 251, thereby forming a touch screen. This touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170. The mechanical input part 214 may be arranged on a steering wheel, a center fascia, a center console, a cockpit module, a door, and equivalents thereof.

The internal camera 220 may acquire an image of the interior of the vehicle 100. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and equivalents thereof using the sensor. The biometric information may be used for user authentication.

The output unit 250 may generate outputs associated with visual output, audio output, haptic output, and equivalents thereof. The output unit 250 may include at least one of the following: the display unit, an audio output unit 252, or a haptic output unit 253.

The term "display unit" may be used to refer to the vehicular display device 800 according to the present disclosure or to a plurality of displays included in the vehicular display device 800. Alternatively, the vehicular display device 800 according to an embodiment of the present disclosure may also be included as one of the display units.

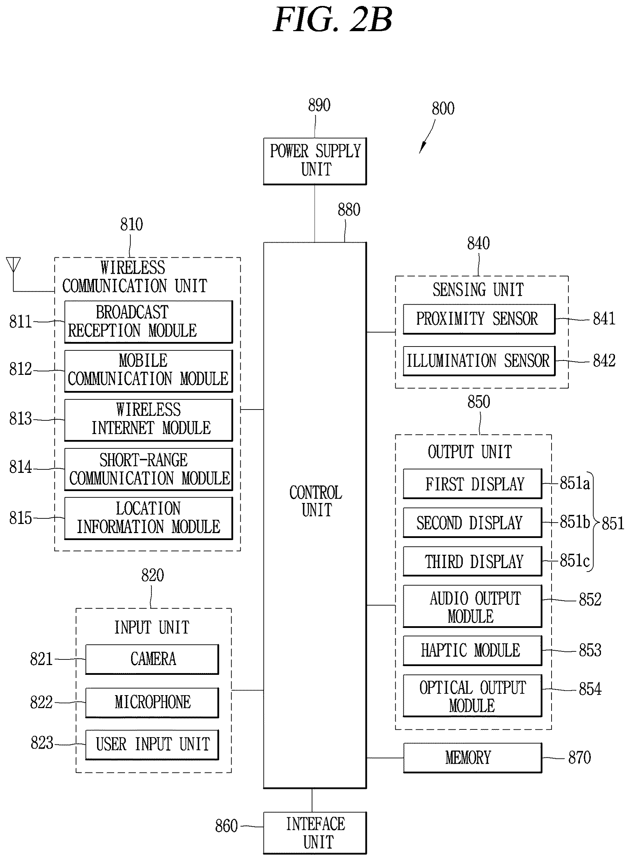

In addition, the term "user interface device 200" may be interpreted as being functionally and structurally equivalent to the vehicular display device 800 according to the present disclosure. In this case, one or more of the constituent elements included in the user interface device 200 in FIG. 1 may be interpreted as being functionally and structurally equivalent to one or more of the constituent elements included in the vehicular display device 800 in FIG. 2B.

The display unit may display graphic objects that correspond to various pieces of information. The display module may include at least one of the following: a liquid crystal display (LCD), a thin-film transistor-LCD (TFT LCD), an organic light-emitting diode (OLED), a flexible display, a three-dimensional (3D) display, or an e-ink display.

The display unit may be configured to have a layered structure or an integrated structure with the touch input unit 213, thereby forming a touch screen.

The display unit may be configured as a head-up display (HUD). In a case where the display unit is configured as a HUD, the display unit may include a projection module, thereby outputting information through a windshield or a window.

The display unit may include a transparent display. The transparent display may be attached to the windshield or the window. The transparent display may have a predetermined degree of transparency and may output a predetermined screen thereon. The transparent display may include at least one of the following: a thin-film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The user interface device 200 may include a plurality of display units. In this case, the plurality of display units may be positioned in various regions of the vehicle.

The audio output part 252 converts an electrical signal, provided from the processor 270 or the control unit 170, into an audio signal and outputs the audio signal. To this end, the audio output part 252 may include at least one speaker.

The haptic output part 253 generates a tactile output. For example, the haptic output unit 253 vibrates the steering wheel, the safety belt, or the seat, thereby enabling the user to perceive the tactile output.

The processor (hereinafter referred to as a 'control unit') 270 may control the overall operation of each unit of the user interface device 200. That is, the user interface device 200 may operate under the control of the control unit 170.

According to an embodiment, the user interface device 200 may include a plurality of processors 270 or may be configured without including the processor 270.

In a case where the processor 270 is not included in the user interface device 200, the user interface device 200 may operate under the control of a processor of another apparatus within the vehicle 100 or under the control of the control unit 170.

The object detection device 300 is a device for detecting an object located outside the vehicle 100. This object may be an external entity associated with the driving of the vehicle 100. Examples of such an object include a lane, another vehicle, a pedestrian, a two-wheeled vehicle, a traffic signal, a light source, a road, a structure, a speed bump, a terrain feature, an animal, and equivalents thereof.

These objects may be classified into movable objects and stationary objects. Examples of such movable objects may conceptually include another vehicle and a pedestrian. Examples of such stationary objects may conceptually include a traffic signal, a road, and a structure.

The object detection device 300 may include a camera 310, a radar 320, a LiDAR 330, an ultrasonic sensor 340, an infrared sensor 350, and a processor 370.

According to an embodiment, the object detection device 300 may further include one or more constituent elements in addition to the constituent elements described in the present specification or may omit one or more of the described constituent elements.

The camera 310 may be located in an appropriate portion of the exterior of the vehicle to acquire an image of the surroundings of the vehicle 100. The camera 310 may be a mono camera, a stereo camera 310a, an Around View Monitoring (AVM) camera 310b, or a 360-degree camera.

For example, the camera 310 may be arranged adjacent to a front windshield within the vehicle 100 to acquire an image of the surroundings in front of the vehicle 100. Alternatively, the camera 310 may be arranged in the vicinity of the front bumper or the radiator grill.

For example, the camera 310 may be arranged adjacent to a rear glass pane within the vehicle 100 to acquire an image of the surroundings behind the vehicle 100. Alternatively, the camera 310 may be arranged adjacent to the rear bumper, the trunk, or the tailgate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be configured based on a pulse radar method or a continuous wave radar method, in accordance with the principle of emitting a radio wave. The radar 320 may be configured based on a Frequency Modulated Continuous Wave (FMCW) method or a Frequency Shift Keying (FSK) method, each of which is among continuous wave radar methods determined according to the signal waveform.

The radar 320 may detect an object based on a time-of-flight (TOF) technique or a phase-shift technique through the use of electromagnetic waves and may determine the location of the object, the distance to the object, and the relative speed with respect to the object.

The radar 320 may be arranged in an appropriate position on the exterior of the vehicle 100 to detect an object that is located in front of, behind, or alongside the vehicle 100.

The LiDAR 330 may include a laser transmission unit and a laser reception unit. The LiDAR 330 may be configured based on the time-of-flight (TOF) technique or the phase-shift technique.

The LiDAR 330 may be configured as a drive-type or non-drive-type LiDAR.

In a case where the LiDAR 330 may be configured as a drive-type LiDAR, the LiDAR 330 may be rotated by a motor and may detect an object in the vicinity of the vehicle 100.

In a case where the LiDAR 330 may be configured as a non-drive-type LiDAR, the LiDAR 330 may detect, through light steering, an object located within a predetermined range of the vehicle 100. The vehicle 100 may include a plurality of non-drive-type LiDAR's 330.

The LiDAR 330 may detect an object based on the time-of-flight (TOF) technique or the phase-shift technique through the use of laser light and may determine the location of the object, the distance to the object, and the relative speed with respect to the object.

The radar 330 may be arranged in an appropriate position on the exterior of the vehicle 100 to detect an object that is located in front of, behind, or alongside the vehicle 100.

The ultrasonic sensor 340 may include an ultrasonic wave transmission unit and an ultrasonic wave reception unit. The ultrasonic sensor 340 may detect an object through the use of ultrasonic waves and may determine the location of the object, the distance to the object, and the relative speed with respect to the object.

The ultrasonic sensor 340 may be arranged in an appropriate position on the exterior of the vehicle 100 to detect an object located in front of, behind, or alongside the vehicle 100.

The infrared sensor 350 may include an infrared ray transmission unit and an infrared ray reception unit. The infrared sensor 340 may detect an object through the use of infrared light and may determine the location of the object, the distance to the object, and the relative speed with respect to the object.

The infrared sensor 350 may be arranged in an appropriate position on the exterior of the vehicle 100 to detect an object located in front of, behind, or alongside the vehicle 100.

The processor 370 may control the overall operation of each unit of the object detection device 300.

The processor 370 may detect and track an object on the basis of an acquired image. The processor 370 may perform operations, such as calculation of a distance to the object and calculation of the relative speed with respect to the object, through the use of an image processing algorithm.

The processor 370 may detect and track an object through the use of reflected electromagnetic waves, resulting from the reflection of emitted electromagnetic waves by the object. The processor 370 may perform operations, such as calculation of the distance to the object and calculation of the relative speed with respect to the object, through the use of electromagnetic waves.

The processor 370 may detect and track an object through the use of reflected laser beams, resulting from the reflection of emitted lasers by the object. The processor 370 may perform operations, such as calculation of the distance to the object and calculation of the relative speed with respect to the object, through the use of laser beams.

The processor 370 may detect and track an object through the use of reflected ultrasonic waves, resulting from the reflection of emitted ultrasonic waves by the object. The processor 370 may perform operations, such as calculation of the distance to the object and calculation of the relative speed with respect to the object, through the use of ultrasonic waves.

The processor 370 may detect and track an object through the use of reflected infrared light, resulting from the reflection of emitted infrared light by the object. The processor 370 may perform operations, such as calculation of the distance to the object and calculation of the relative speed with respect to the object, through the use of infrared light.

According to an embodiment, the object detection device 300 may include a plurality of processors 370 or may be configured without including the processor 370. The camera 310, the radar 320, the LiDAR 330, the ultrasonic sensor 340, and the infrared sensor 350 may each include a respective processor for individual operation.

In a case where the processor 370 is not included in the object detection device 300, the object detection device 300 may operate under the control of a processor of an apparatus within the vehicle 100 or under the control of the control unit 170.

The object detection device 300 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to the constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (Vehicle to Infrastructure (V2I)), with another vehicle (Vehicle to Vehicle (V2V)), or with a pedestrian (Vehicle to Pedestrian (V2P)). The V2X communication unit 430 may include an RF circuit capable of implementing protocols for communication with an infrastructure (V2I), communication between vehicles (V2V), and communication with a pedestrian (V2P).

The optical communication unit 440 is a unit for performing communication with an external device through the use of light. The optical communication unit 440 may include an optical transmission part for converting an electrical signal into an optical signal and transmitting the optical signal to the outside, and an optical reception part for converting the received optical signal back into an electrical signal.

According to an embodiment, the optical transmission part may be integrally formed with a lamp included in the vehicle 100.

The broadcast transceiver 450 is a unit for receiving a broadcast signal from an external broadcast management server or transmitting a broadcast signal to the broadcast management server over a broadcast channel. The broadcast channel may refer to a satellite channel, a terrestrial channel, or both. The broadcast signal may include a TV broadcast signal, a radio broadcast signal, and a data broadcast signal.

The processor 470 may control the overall operation of each unit of the communication device 400.

According to an embodiment, the communication device 400 may include a plurality of processors 470 or may be configured without including the processor 470.

In a case where the processor 470 is not included in the communication device 400, the communication device 400 may operate under the control of a processor of another device within the vehicle 100 or under the control of the control unit 170.

The communication device 400, together with the user interface device 200, may constitute a vehicular display device. In this case, the vehicular display device may be referred to as a telematics device or an Audio Video Navigation (AVN) device.

The communication device 400 may operate under the control of the control unit 170.

The driving operation apparatus 500 is an apparatus for receiving a user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input apparatus 510 may receive an input regarding the driving direction of the vehicle 100 from the user. The steering input apparatus 510 is preferably formed in the form of a wheel, thereby enabling a steering input through the rotation of the wheel. According to an embodiment, the steering input apparatus may also be formed in the shape of a touch screen, a touchpad, or a button.

The acceleration input apparatus 530 may receive, from the user, an input for accelerating the vehicle 100. The brake input apparatus 570 may receive, from the user, an input for decelerating the vehicle 100. The acceleration input apparatus 530 and the brake input apparatus 570 are preferably formed in the shape of a pedal. According to an embodiment, the acceleration input apparatus or the brake input apparatus may also be formed in the shape of a touch screen, a touchpad, or a button.

The driving operation apparatus 500 may operate under the control of the control unit 170.

The vehicle drive apparatus 600 is an apparatus that electrically controls driving of various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to the constituent elements described in the present specification or may omit one or more of the described constituent elements.

The vehicle drive apparatus 600 may include a processor. Units of the vehicle drive apparatus 600 may each include a respective processor for individual operation.

The power train drive unit 610 may control the operation of a power train apparatus.

The power train drive unit 610 may include a power source drive part 611 and a transmission drive part 612.

The power source drive part 611 may execute control of a power source of the vehicle 100.

For example, in a case where the power source of the vehicle 100 is a fossil fuel-based engine, the power source drive part 611 may execute electronic control of the engine. Accordingly, output torque and other parameters of the engine may be controlled. The power source drive part 611 may adjust the engine output torque under the control of the control unit 170.

For example, in a case where the power source of the vehicle 100 is an electric energy-based motor, the power source drive part 611 may execute control of the motor. The power source drive part 611 may adjust the rotational speed, torque, and other parameters of the motor under the control of the control unit 170.

The transmission drive part 612 may execute control of a transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle 100 is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control of a steering apparatus within the vehicle 100. The steering drive part 621 may change the driving direction of the vehicle 100.

The brake drive part 622 may execute electronic control of a brake apparatus within the vehicle 100. For example, the brake drive part 622 may reduce the speed of the vehicle 100 by controlling the operation of the brakes provided on the wheels.

The brake drive part 622 may individually control each of a plurality of brakes. The brake drive part 622 may control application of braking forces to the plurality of wheels in a different manner.

The suspension drive part 623 may execute electronic control of a suspension apparatus within the vehicle 100. For example, in a case where a road surface is uneven, the suspension drive part 623 may reduce vibration of the vehicle 100 by controlling the suspension apparatus. The suspension drive part 623 may control each of the plurality of suspensions individually.

The door/window drive unit 630 may execute electronic control of a door apparatus or a window apparatus within the vehicle 100.

The door/window drive unit 630 may include a door drive part 631 and a window drive part 632.

The door drive part 631 may execute control of the door apparatus. The door drive part 631 may control opening or closing of a plurality of doors included in the vehicle 100. The door drive part 631 may control opening or closing of the trunk or the tailgate. The door drive part 631 may control opening or closing of the sunroof.

The window drive part 632 may execute electronic control of the window apparatus. The window drive part 632 may control opening or closing of a plurality of windows included in the vehicle 100.

The safety apparatus drive unit 640 may execute electronic control of various safety apparatuses within the vehicle 100.

The safety apparatus drive unit 640 may include an airbag drive part 641, a seatbelt drive part 642, and a pedestrian protection apparatus drive part 643.

The airbag drive part 641 may execute electronic control of an airbag apparatus within the vehicle 100. For example, when a risk is detected, the airbag drive part 641 may control an airbag in such a manner that the airbag is deployed.

The seatbelt drive part 642 may execute electronic control of a seatbelt apparatus within the vehicle 100. For example, when a risk is detected, the seatbelt drive part 642 may secure occupants seated in seats 110FL, 110FR, 110RL, and 110RR by tightening respective seatbelts.

The pedestrian protection apparatus drive part 643 may execute electronic control of the hood lift and the pedestrian airbag. For example, when a collision with a pedestrian is detected, the pedestrian protection apparatus drive part 643 may control the hood lift and the pedestrian airbag in such a manner that the hood lift and the pedestrian airbag are deployed.

The lamp drive part 650 may execute electronic control of various lamp apparatuses within the vehicle 100.

The air-conditioner drive unit 660 may execute electronic control of an air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include a processor. Units of the vehicle drive apparatus 600 may each include a respective processor for individual operation.

The vehicle drive apparatus 600 may operate under the control of the control unit 170.

The operational system 700 is a system that controls various driving functions of the vehicle 100. The operational system 700 may operate in the autonomous driving mode.

The operational system 700 may include the driving system 710, the parking-lot departure system 740, and the parking system 750.

According to an embodiment, the operational system 700 may further include one or more constituent elements in addition to the constituent elements described in the present disclosure or may emit one or more of the described constituent elements.

The operational system 700 may include a processor. Units of the operational system 700 may each include a respective processor for individual operation.

According to an embodiment, in a case where the operational system 700 may be implemented in software, the operational system 700 may also conceptually operate at a lower level than the control unit 170.

According to an embodiment, the operational system 700 may conceptually include at least one of the following: the user interface device 200, the object detection device 300, the communication device 400, the vehicle drive apparatus 600, or the control unit 170.

The driving system 710 may enable the vehicle 100 to be driven.

The driving system 710 may receive navigation information from the navigation system 770, may provide a control signal to the vehicle drive apparatus 600, and may enable the vehicle 100 to be driven. The driving system 710 may receive object information from the object detection device 300, may provide a control signal to the vehicle drive apparatus 600, and may enable the vehicle 100 to be driven. The driving system 710 may receive a signal from an external device through the communication device 400, may provide a control signal to the vehicle drive apparatus 600, and may enable the vehicle 100 to be driven.

The parking-lot departure system 740 may perform a maneuver to guide the vehicle 100 out of a parking lot.

The parking-lot departure system 740 may receive the navigation information from the navigation system 770, may provide a control signal to the vehicle drive apparatus 600, and may perform a maneuver to guide the vehicle 100 out of the parking Iot. The parking-lot departure system 740 may receive object information from the object detection device 300, may provide a control signal to the vehicle drive apparatus 600, and may perform a maneuver to guide the vehicle 100 out of the parking lot. The parking-lot departure system 740 may receive a signal from an external device through the communication device 400, may provide a control signal to the vehicle drive apparatus 600, and may perform a maneuver to guide the vehicle 100 out of the parking lot.

The parking system 750 may perform a maneuver to park the vehicle 100.

The parking system 750 may receive the navigation information from the navigation system 770, may provide a control signal to the vehicle drive apparatus 600, and may perform a maneuver to park the vehicle 100. The parking system 750 may receive object information from the object detection device 300, may provide a control signal to the vehicle drive apparatus 600, and may perform a maneuver to park the vehicle 100. The parking system 750 may receive a signal from an external device through the communication device 400, may provide a control signal to the vehicle drive apparatus 600, and may perform a maneuver to park the vehicle 100.

The navigation system 770 may provide the navigation information. The navigation information may include at least one of the following: map information, preset destination information, path information based on the set destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update previously stored information by receiving information from an external device through the communication device 400.

According to an embodiment, the navigation system 770 may also be classified as a sub-constituent element of the user interface device 200.

The sensing unit 120 may sense the state of the vehicle 100. The sensing unit 120 may include a posture sensor (e.g., a yaw sensor, a roll sensor, a pitch sensor, or a similar sensor), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and equivalents thereof.

The sensing unit 120 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as an interface for various types of external devices connected to the vehicle 100. For example, the vehicular interface unit 130 may include a port that enables a connection with a mobile terminal and may be connected to the mobile terminal through the port. In this case, the vehicular interface unit 130 may exchange data with the mobile terminal.

The vehicular interface unit 130 may serve as an interface for supplying electrical energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 is electrically connected to the control unit 170. Basic data for the units, control data for controlling operations of the units, and input and output data may be stored in the memory 140. Examples of the memory 140 may include various hardware storage devices, such as ROM, RAM, EPROM, flash memory, and a hard disk drive. Programs and equivalents thereof for processing or control by the control unit 170 and various data for the overall operation of the vehicle 100 may be stored in the memory 140.

According to an embodiment, the memory 140 may be integrally formed with the control unit 170 or may be configured as a sub-constituent element of the control unit 170.

The control unit 170 may control the overall operation of each unit within the vehicle 100. The control unit 170 may be referred to as an Electronic Control Unit (ECU).

The power supply unit 190 may supply power necessary for the operation of each constituent element under the control of the control unit 170. Specifically, the power supply unit 190 may be supplied with power from the battery within the vehicle 100 or from other sources.

At least one processor and the control unit 170, which are included in the vehicle 100, may be configured based on at least one of the following: application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or electric units performing other functions.

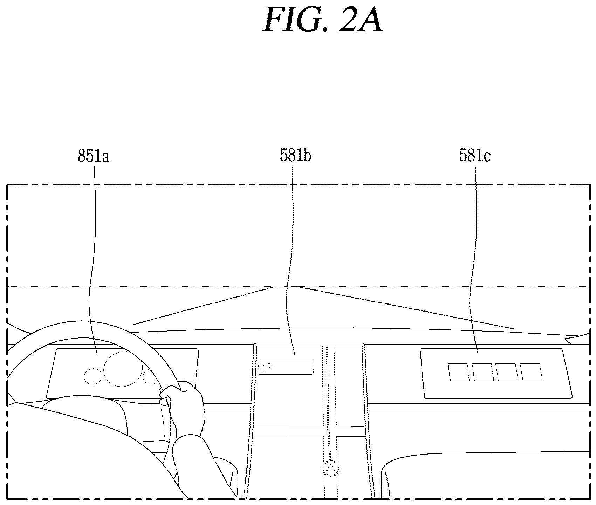

FIG. 2A is an exemplary view illustrating that the vehicular display device 800 according to the present disclosure is mounted in the vehicle. FIG. 2B is an exemplary diagram that is referenced to describe the detailed configuration of the vehicular display device 800 according to the present disclosure.

The term 'vehicular display device 800' may be interpreted as being functionally and structurally equivalent to the user interface device 200 described with reference to FIG. 1. However, the vehicular display device 800 described in embodiments of the present disclosure is mounted on the dashboard of the vehicle 100 and includes the plurality of displays.

As illustrated in FIG. 2A, the vehicular display device 800 according to the embodiment of the present disclosure may be mounted on the dashboard within the vehicle 100. The vehicular display device 800 may be configured in such a manner that the plurality of displays, extending in the lengthwise direction from the position of the driver's seat toward the position of the front passenger seat, are included in the dashboard.

For example, the vehicular display device 800 may be mounted on the dashboard of the vehicle. The vehicular display device 800 may control various devices used for vehicle driving or may display information necessary for vehicle operation and information necessary for providing convenience to a vehicle occupant on the plurality of displays, namely, on a display unit 851.

The display unit 851 may include a first display 851a, a second display 851b, and a third display 851c, all of which may be included within a single frame. In addition, the display unit 851, as illustrated in FIG. 2A, may be configured to have a wing-like structure. In addition, the display unit 851 may be configured to be seamlessly connected in the horizontal direction.

With reference to FIG. 2B, the vehicular display device 800 may include a wireless communication unit 810, an input unit 820, a sensing unit 840, an output unit 850, an interface unit 860, a memory 870, a control unit 880, a power supply unit 890, and equivalents thereof. The constituent elements illustrated in FIG. 2B are not essential to constitute the vehicular display device. The vehicular display device may further include one or more constituent elements in addition to the constituent elements described in the present specification or may omit one or more of the described constituent elements.

More specifically, among the constituent elements, the wireless communication unit 810 may include one or more modules which enable wireless communication between the vehicular display device 800 and a wireless communication system, between the vehicular display device 800 and another vehicular display device 800, or between the vehicular display device 800 and an external server. In addition, the wireless communication unit 810 may include one or more modules which connect the vehicular display device 800 to one or more networks.

The wireless communication unit 810 may include at least one of the following: a broadcast reception module 811, a mobile communication module 812, a wireless Internet module 813, a short-range communication module 814, or a location information module 815.

The input unit 820 may include a camera 821 or another image input unit for receiving an image signal as input, a microphone 822 or another audio input unit for receiving an audio signal as input, and a user input unit 823 (e.g., a touch key, a mechanical key, or an equivalent thereof) for receiving information as input from the user. Voice data or image data that are collected through the input unit 820 may be analyzed and may be converted into a control command of the user.

The sensing unit 840 may include one or more sensors for sensing at least one of the following: information within the vehicular display device, information about the surrounding environment of the vehicular display device, or user information. For example, the sensing unit 840 may include at least one of the following: a proximity sensor 841, an illumination sensor 842, a touch sensor, an acceleration sensor, a magnetic sensor, a G-sensor, a gyroscope sensor, a motion sensor, an RGB sensor, an infrared (IR) sensor, a finger scanning sensor, an ultrasonic sensor, an optical sensor (e.g., a camera 821), a microphone 822, a battery gauge, an environment sensor (e.g., a barometer, a hygrometer, a thermometer, a radiation detection sensor, a thermal sensor, a gas sensor, or an equivalent thereof), or a chemical sensor (e.g., an electronic nose, a health care sensor, a biometric sensor, or an equivalent thereof). The vehicular display device disclosed in the present disclosure may be configured to combine and utilize pieces of information sensed by at least two sensors from among the sensors mentioned above.

The output unit 850 may be configured to generate outputs associated with visual output, audio output, haptic output, and equivalents thereof. The output unit 850 may include at least one of the following: a display unit 851, an audio output module 852, a haptic module 853, or an optical output module 854. The display unit 851 may be configured to have a layered structure or an integrated structure with a touch sensor, thereby forming a touch screen. The touch screen may function as the user input unit 823 that provides an input interface between the vehicular display device 800 and the user and may further provide an output interface between the vehicular display device 800 and the user.

The interface unit 860 serves as an interface for various types of external devices connected to the vehicular display device 800. The interface unit 860 may include at least one of the following: a wired or wireless headset port, an external power supply port, a wired or wireless data port, a memory card port, a port for connecting a device including an identification module, an audio input/output (I/O) port, a video I/O port, or an earphone port. When an external device is connected to the interface unit 860, the vehicular display device 800 may perform suitable control associated with the connected external device. In addition, data that support various functions of the vehicular display device 800 is stored in the memory 870. A multiplicity of application programs (or applications) executed on the vehicular display device 800, and data and commands for the operation of the vehicular display device 800 may be stored in the memory 870. At least one of these application programs may be downloaded from an external server through wireless communication. At least one application program may be pre-installed on the vehicular display device 800 prior to shipment to provide basic functions of the vehicular display device 800 (e.g., receiving calls, placing calls, receiving messages, sending messages, and similar operations). The application program may be stored in the memory 870. The application program may be installed on the vehicular display device 800 and be executed in such a manner that the control unit 880 performs an operation (or function) of the vehicular display device.

Normally, the control unit 880 controls the overall operation of the vehicular display device 800, in addition to operations associated with the application programs described above. The control unit 880 may provide or process information or may perform functions, the information and functions being appropriate for the user, by processing signals, data, information, or an equivalent thereof, which are input or output by the constituent elements described above, or by executing the application programs stored in the memory 870.

In addition, the control unit 880 may control at least one of the constituent elements described with reference to FIG. 1A in order to execute the application programs stored in the memory 870. Moreover, the control unit 880 may control at least two of the constituent elements included in the vehicular display device 800 in combination in order to execute the application programs.

Under the control of the control unit 880, the power supply unit 890 may be provided with external power and supply the external power to each constituent element included in the vehicular display device 800. At least two of the constituent elements may operate in cooperation with one another to perform an operation or control of the vehicular display device, or to implement a method of controlling the vehicular control device, according to various embodiments. In addition, the operation or the control of the vehicular display device 800, or the method of controlling the vehicular display apparatus 800, may be performed on the vehicular display device by executing at least one application program stored in the memory 870.

Prior to describing various embodiments implemented through the above-described vehicular display device 800, the constituent elements enumerated above are described in more detail below with reference to FIG. 2B.

First, the wireless communication unit 810 is described. The broadcast receiving module 811 of the wireless communication unit 810 receives a broadcast signal and/or broadcast-associated information from the external broadcast management server over a broadcast channel. The broadcast channel may include a satellite channel, a terrestrial channel, or both. Two or more broadcast receiving modules may be provided in the vehicular display device 800 in order to simultaneously receive broadcast signals over at least two broadcast channels or to switch between broadcast channels.

The broadcast management server refers to either a server that generates and transmits a broadcast signal and/or broadcast-associated information, or a server that receives a broadcast signal and/or broadcast-associated information that has already been generated and transmits the received signal and/or information to the vehicular display device. The broadcast signal may include not only individual signals, such as a TV broadcast signal, a radio broadcast signal, and a data broadcast signal, but also a composite broadcast signal resulting from a combination of the data broadcast signal with either the TV broadcast signal or the radio broadcast signal.

The broadcast signal may be encoded in compliance with at least one of the technical standards (or broadcast schemes, such as ISO, IEC, DVB, and ATSC) for transmission and reception of digital broadcast signals. The broadcast reception module 811 may receive the digital broadcast signal using a scheme appropriate for technical specifications defined in the technical standards.

The broadcast-associated information may refer to information associated with a broadcast channel, a broadcast program, or a broadcast service provider. The broadcast-associated information may also be provided through a mobile communication network. In this case, the broadcast-associated information may be received by the mobile communication module 812. For example, the broadcast-associated information may take the form of either an Electronic Program Guide (EPG) in Digital Multimedia Broadcasting (DMB) or an Electronic Service Guide (ESG) in Digital Video Broadcast-Handheld (DVB-H). The broadcast signal and/or the broadcast-associated information received through the broadcast receiving module 811 may be stored in the memory 860.

The mobile communication module 812 can transmit wireless signals to and receive wireless signals from at least one of the following: a base station, an external terminal, or a server. This transmission and reception are performed over a mobile communication network established in compliance with the technical standards or communication schemes (Global System for Mobile Communication (GSM), Code Division Multi Access (CDMA), CDMA 2000 (Code Division Multi Access 2000), Enhanced Voice-Data Optimized or Enhanced Voice-Data Only (EV-Do), Wideband CDMA (WCDMA), High Speed Downlink Packet Access (HSDPA), High Speed Uplink Packet Access (HSUPA), Long Term Evolution (LTE), Long Term Evolution-Advanced (LTE-A), and other similar technologies) for mobile communication. The wireless signal includes a voice call signal, a video telephone call signal, or various forms of data that are used for the transmission and reception of text or multimedia messages.

The wireless Internet module 813 refers to a module for wireless Internet access. The wireless Internet module 813 may be internally or externally coupled to the vehicular display device 800. The wireless Internet module 813 may transmit and receive wireless signals over communication networks in compliance with a wireless Internet technology.

Examples of such wireless Internet technology include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and other similar technologies. The wireless Internet module 813 may transmit and receive data in compliance with at least one of the foregoing or other unlisted wireless Internet technologies. Wireless Internet access in compliance with, for example, WiBro, HSDPA, HSUPA, GSM, CDMA, WCDMA, LTE, LTE-A, and other similar technologies is established over a mobile communication network. As such, the wireless Internet module 813, which establishes wireless Internet access over the mobile communication network, may also be considered a type of the mobile communication module 812.

The short-range communication module 814 is a module for short-range communication. The short-range communication module 814 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB). Over a short-distance wireless area network, the short-range communication module 814 may support wireless communication between the vehicular display device 800 and a wireless communication system, between the vehicular display device 800 and another vehicular display device 800, or between the vehicular display device 800 and a network accessed by another vehicular device 800 (or an external server). The wireless area network may be a short-distance wireless personal area network.

The location information module 815 is a module for acquiring the location (or the current location) of the vehicular display device. Representative examples of the location information module 815 may include a Global Positioning System (GPS) module and a Wireless Fidelity (WiFi) module. As an example, through a GPS module, the vehicular display device may acquire the location thereof using signals transmitted from a GPS satellite. As another example, through a Wi-Fi module, the vehicular display device may acquire the location thereof based on information from a wireless access point (AP) that transmits wireless signals to and receives wireless signals to the Wi-Fi module. As needed, the location information module 815 may alternatively or additionally perform the function of another module of the wireless communication unit 810 in order to obtain data about the location of the vehicular display device. The location information module 815 is a module used to acquire the location (the current location) of the vehicular display device. The location information module 815 is not limited to a module that directly calculates or acquires the location of the vehicular display device.

Next, the input unit 820 is a unit for receiving, as input, image information (or an image signal), audio information (or an audio signal), data, or information from the user. The vehicular display device 800 may include one or more camera 821 in order to receive the image information as input. The camera 821 processes image frames of still images, moving images, or equivalents thereof, which are captured by an image sensor in a video call mode or an image capture mode. The processed image frames may be displayed on the display unit 851 or may be stored in the memory 870. The plurality of cameras 821 configured to be included in the vehicular display device 800 is arranged in a matrix structure. Through the cameras 821 arranged in this matrix structure, a plurality of pieces of image information captured at various angles or focal points may be input to the vehicular display device 800. In addition, the plurality of cameras 821 may be arranged in a stereoscopic arrangement in such a manner as to acquire left and right images to form a stereoscopic image.

The microphone 822 processes an external audio signal into electrical voice data. The processed voice data may be utilized in various ways depending on the function performed on (or the application program executed) the vehicular display device 800. Various noise removal algorithms for eliminating noise generated while the external audio signal is received as input may be executed by the microphone 822.

The user input unit 823 is a unit for receiving information as input from the user. When information is input through the user input unit 823, the control unit 880 may control the operation of the vehicular display device 800 in accordance with the input information. The user input unit 823 may include a mechanical input unit (or a mechanical key, such as a button, a dome switch, a jog wheel, or a jog switch, each of which is positioned on the front, rear, or side surface of the vehicular display device 800) and a touch-sensitive input unit. As an example, the touch-sensitive input unit may be configured as a virtual key, a soft key or a graphic key, each of which is displayed on a touch screen through software execution, or as a touch key which is arranged on a region other than the touch screen. The virtual key or the graphic key may be displayed on the touch screen in various forms, for example, a graphic image, text, an icon, video content, and any combination thereof.

The sensing unit 840 senses at least one of the following: information within the vehicular display device, information about the surrounding environment of the vehicular display device, or user information. The sensing unit 840 generates a sensing signal corresponding to the sensed information. Based on the sensing signal, the control unit 880 controls the driving or operation of the vehicular display device 800 or performs data processing, a function, or an operation, each of which is associated with an application program installed on the vehicular display device 800. Representative sensors, among various sensors that may be included in the sensing unit 840, are described in more detail.

First, the proximity sensor 841 refers to a sensor that senses the presence or absence of either an object approaching a predetermined detection surface or an object present adjacent to the predetermined detection surface, using electromagnetic fields, infrared rays, or equivalents thereof without mechanical contact. The proximity sensor 841 may be arranged adjacent to an inner region of the vehicular display device covered by the touch screen or to the touch screen.

Examples of the proximity sensor 841 may include a transmissive photoelectric sensor, a direct reflective photoelectric sensor, a mirror reflective photoelectric sensor, a high-frequency oscillation-type proximity sensor, a capacitance-type proximity sensor, a magnetic proximity sensor, an infrared proximity sensor, and other types of sensors. When the touch screen is of a capacitance type, the proximity sensor 841 may be configured to detect the approach of a conductive object based on a change in the electromagnetic field caused by the approaching object. In this case, the touch screen (or touch sensor) itself may also be categorized as a proximity sensor.

For descriptive convenience, the term "proximity touch" refers to a touch input in which an approaching object is recognized as being positioned on the touch screen without making physical contact with the touch screen. The term "contact" touch refers to a touch input in which an object makes physical contact with the touch screen. The position at which an object makes proximity contact with the touch screen refers to a position at which the object is perpendicular to the touch screen when the object makes proximity contact with the touch screen. The proximity sensor 841 may detect proximity touch and proximity touch patterns (e.g., a proximity touch distance, a proximity touch direction, a proximity touch speed, a proximity touch time, a proximity touch position, a proximity touch movement state, and similar parameters). As described above, the control unit 880 may process data (or information) corresponding to a proximity touch motion and a proximity touch pattern that are sensed through the proximity sensor 841, and may output visual information, corresponding to the processed data, on the touch screen. Moreover, the control unit 880 may control the vehicular display device 800 in such a manner that different operations or different types of data processing are performed according to whether a touch at the same point on the touch screen is a proximity touch or a contact touch.

The touch sensor senses a touch (or touch input) applied to the touch screen (or the display unit 851), using at least one of various types of sensing technologies, such as resistive, capacitive, infrared, and magnetic field technologies.

As an example, the touch sensor may be configured to convert a change in pressure applied to a specific region of the touch screen, a change in capacitance occurring at the specific region thereof, or a change in an equivalent parameter into an electrical input signal. A touch tool applies a touch to the touch screen, and the touch sensor may be configured to sense a contact position, a contact area, applied pressure, generated capacitance, and equivalents thereof that result when the touch tool applies a touch to the touch screen. At this point, the touch tool is an object that applies a touch to the touch screen, and examples of the touch tool may include a human finger, a touch pen, a stylus pen, a pointer, and equivalents thereof.

When a touch input is sensed by a touch sensor in this manner, a corresponding signal (or corresponding signals) may be transmitted to a touch controller. The touch controller processes the received signal(s), and then transmits corresponding data to the control unit 880. Accordingly, the control unit 880 may recognize which region of the display unit 851 has been touched. At this point, the touch controller may be a constituent element separate from the control unit 880 or may be the control unit 880 itself.

The control unit 880 may perform control that varies according to a type of the touch tool that touches the touch screen (or a touch key provided in addition to the touch screen), or may perform the same control regardless of the type of the touch tool. It may be determined, according to the current operating state of the vehicular display device 800 or to an application program being executed, whether to perform control that varies according to the type of the touch tool or to perform the same control regardless of the type of the touch tool.

The touch sensor and the proximity sensor, which are described above, may sense various types of touches, individually or in combination, such as a short (or tap) touch, a long touch, a multi-touch, a drag touch, a flick touch, a pinch-in touch, a pinch-out touch, a swipe touch, and a hovering touch.

The ultrasonic sensor may recognize the location information of a detection target using ultrasonic waves. The control unit 880 may calculate the location of a wave generation source through information sensed by the optical sensor and a plurality of ultrasonic sensors. Since the propagation speed of light is significantly greater than that of ultrasonic waves, the time at which the light reaches the optical is earlier than the time at which the ultrasonic wave reaches the ultrasonic sensor. The location of the wave generation source may be calculated based on this difference in arrival times. More specifically, the location of the wave generation source may be calculated based on the difference in arrival time between the light, serving as a reference signal, and the ultrasonic wave.

The camera 821, which is described as a component of the input unit 820, includes at least one of the following: a camera sensor (e.g., a CCD, a CMOS, or an equivalent thereof), a photo sensor (or an image sensor), or a laser sensor.

The camera 821 and the laser sensor may operate together to detect a touch input made by the detection target on a 3D stereoscopic image. A photo sensor is stacked on top of a display element and configured to scan the movement of the detection target approaching the touch screen. More specifically, the photo sensor includes photodiodes and transistors (TRs) mounted in rows and/or columns, and thus scans an object placed on the photo sensor using an electrical signal that varies with the amount of light incident on the photodiodes. That is, the photo sensor may calculate the coordinates of the detection target that vary with a change in the amount of light, and may acquire the location information of the detection target from these coordinates.

The display unit 851 outputs information processed in the vehicular display device 800. For example, the display unit 851 may display execution screen information of an application program being executed on the vehicular display device 800, or may display user interface (UI) information and graphic user interface (GUI) information that are associated with the execution screen information.

In addition, the display unit 851 may be configured as a stereoscopic display unit for displaying stereoscopic images.

The stereoscopic display unit may employ stereoscopic display technologies, such as a stereoscopic (glasses-based) technology, an auto-stereoscopic (glassless) technology, and a projection (holographic) technology.

The audio output module 852 may output audio data, either received from the wireless communication unit 810 or stored in the memory 870, in a call signal reception mode, a telephone mode, a recording mode, a voice recognition mode, a broadcast reception mode, and equivalents thereof. The audio output module 852 also outputs audio signals (e.g., call signal reception sound, message reception sound, and equivalents thereof) associated with functions performed on the vehicular display device 800. The audio output module 852 may include a receiver, a speaker, a buzzer, and an equivalent thereof.

A haptic module 853 generates various tactile effects that are perceivable by the user. A representative example of the tactile effect generated by the haptic module 853 may be vibration. The strength, pattern, and other parameters of the vibration generated by the haptic module 853 may be controlled by a user selection or a setting of the control unit 880. For example, the haptic module 853 may output different vibrations in a composite manner or in a sequential manner.

In addition to vibration, the haptic module 853 may generate various other tactile effects, such as tactile stimulation and thermal sensations simulating cold and warm conditions. Examples of tactile stimulation include vertical movement of pins relative to the human skin, spray or suction of air directed toward the human skin through a jet orifice or suction opening, brushing against the human skin, contact between an electrode with the human skin, and application of electrostatic force to the human skin. The thermal sensations may be produced using an element capable of absorbing or generating heat.

The haptic module 853 may be configured not only to deliver the tactile effect through direct contact with the human skin, but also to enable the user to perceive the tactile effect through muscle-based sensation in his/her finger or arm. Two or more haptic modules 853 may be provided, depending on the configuration of the vehicular display device 800.

The optical output module 854 outputs a signal indicating the occurrence of an event using light from a light source of the vehicular display device 800. Examples of the event occurring in the vehicular display device 800 may include message reception, incoming call signal reception, missed call notification, alarm activation, schedule-based alert, email reception, information reception through an application, and equivalents thereof.

A signal is output by the optical output module 854 when the vehicular display device emits light of a single color or a plurality of colors toward the front or rear surface thereof. The signal output may be terminated when the vehicular display device detects that the user has acknowledged the event.

The interface unit 860 serves as an interface for an external device connected to the vehicular display device 800. Through the interface unit 860, data are received from the external device, or power is supplied. The received data and the supplied power are transferred to each constituent element within the vehicular display device 800. Alternatively, through the interface unit 860, data within the vehicular display device 800 are transmitted to the external device. For example, the interface unit 860 may include wired and/or wireless headset ports, external power supply ports, wired or wireless data ports, memory card ports, ports for connecting a device having an identification module, audio input/output (I/O) ports, video I/O ports, earphone ports, and equivalents thereof.

The identification module may be a chip that stores various information for authenticating the authority to use the vehicular display device 800. Examples of the identification module may include a user identity module (UIM), a subscriber identity module (SIM), a universal subscriber identity module (USIM), and equivalents thereof. The device (hereinafter referred to as an "identification device"), including the identification module, may be manufactured in the form of a smart card. Accordingly, the identification device may be connected to the vehicular display device 800 through the interface unit 860.

The memory 870 can store programs to support operations of the control unit 880 and store input/output data (for example, phonebooks, messages, still images, videos, etc.). Data associated with vibration and sound in various patterns that are output in response to a touch input applied to the touch screen may be stored in the memory 870.

Data associated with a form factor changeable through the plurality of displays that constitute the display unit 851 may be stored in the memory 870. In addition, various conditions under which the form factor of the plurality of displays is changed, for example, data that are associated with driving, a specific driving mode (e.g., an autonomous driving mode, a parking mode, or an equivalent thereof), the attributes of requested content or services, a request through user input, and equivalents thereof may be stored in the memory 870. Data associated with a form factor that is changed in response to a control command from the control unit 880 may be stored in the memory 870 for later use.

The memory 870 may include at least one of the types of storage media, such as flash memory, hard disk, solid-state disk (SSD), silicon disk drive (SDD), micro multimedia card, card-type memory (e.g., SD or DX memory), Random Access Memory (RAM), Static Random Access Memory (SRAM), Read-Only Memory (ROM), Electrically Erasable Programmable Read-Only Memory (EEPROM), Programmable Read-Only memory (PROM), magnetic memory, magnetic disk, optical disk, or an equivalent thereof. The vehicular display device 800 may operate in association with a web-based storage service that performs, over the Internet, a storage function analogous to that of the memory 870.

As described above, the control unit 880 controls operations associated with application programs and normally controls the overall operation of the vehicular display device 800. For example, when the state of the vehicular display device satisfies a preset condition, the control unit 880 may activate or deactivate a locked state that restricts user input of control commands for applications.

In addition, the control unit 880 may perform control and processing associated with voice calls, data communications, video calls, and equivalents thereof, or may perform pattern recognition processing for recognizing handwritten inputs and drawings on the touch screen as textual characters and images.

In addition, the control unit 880 may control respective drive modes for the plurality of displays in order to change the form factor of the display unit 851.

Specifically, the control unit 880 may determine an optimal display form factor based on the driving state of the vehicle, which is obtained from sensing data or an equivalent thereof from the vehicle, the attributes of the requested content or services, and the user's input request. In addition, the control unit 880 may check, taking into consideration the current driving situation of the vehicle, whether a change to a determined form factor is feasible, and may subsequently control such a change to the determined form factor by transferring a control command to at least one of the plurality of displays.

Moreover, the control unit 880 may control one of the above-described constituent elements or a combination of two or more thereof in order to implement various embodiments, described below, on the vehicular display device 800 according to the present disclosure.

The display unit 851 displays (outputs) information processed by the vehicular display device 800. For example, the display unit 851 may display execution screen information of an application program being executed on the vehicular display device 800, or may display user interface (UI) information and graphic user interface (GUI) information that are associated with the execution screen information.

The display unit 851 may include at least one of the following: liquid crystal display (LCD), thin-film transistor liquid crystal display (TFT LCD), organic light-emitting diode (OLED), flexible display, 3D display, or e-ink display.

In addition, two or more display units 851 may be provided in accordance with the configuration of the vehicular display device 800. In this case, the plurality of display units may be arranged on one surface of the vehicular display device 800 either in a spaced-apart manner or in an integrated manner. Alternatively, the plurality of display units may be arranged on different surfaces, respectively, of the vehicular display device 800.

The display unit 851 may include a touch sensor that detects a touch on the display unit 851 in such a manner as to receive a control command through touch input. Accordingly, when a touch is applied to the display unit 851, the touch sensor detects the touch, and, based on the detection of the touch, the control unit 880 may generate a control command corresponding to the touch. The content that is input through touch input may be a letter, a number, a mode-specific instruction, a selectable menu item, or an equivalent thereof.

The display unit 851 is configured to include the plurality of displays, including the first display 851a, the second display 851b, and the third display 851c. In addition, at least one of the plurality of displays may be a flexible display. In addition, at least one of the plurality of displays is configured to undergo relative movement, relative rotation, outward or inward protrusion, or raising or lowering motion in response to a control command, thereby changing the form factor of the display unit 851.

Different content items may be displayed on the first display 851a, the second display 851b, and the third display 851c, respectively. In addition, two or more of the first display 851a, the second display 851b, and the third display 851c may be used as extended screens, thereby enabling one content item or associated content to be displayed on the extended screens in a connected or linked manner.

At least one of the following: the first display 851a, the second display 851b, or the third display 851c may be driven to change the form factor in response to a control command from the control unit 880. In this case, content displayed on at least one of the following: the first display 851a, the second display 851b, or the third display 851c may be changed to have the screen ratio, screen size, screen direction, and content attribute that are appropriate for the changed form factor.

The microphone 822 is configured to receive the user's voice, other sounds, and equivalents thereof as audio input. The microphone 822 may be provided at a plurality of positions and configured to receive stereo sound as audio input.

The interface unit 860 serves as an interface for connecting the vehicular display device 800 to an external device. For example, the interface unit 860 may include at least one of the following: a connection terminal for connection to another device (e.g., an earphone, an external speaker, or an equivalent thereof), a port (e.g., an IrDA port, a Bluetooth port, a wireless LAN port, or an equivalent thereof) for short-distance communication, or a power supply terminal for supplying power to the vehicular display device 800. The interface unit 860 may also be configured in the form of a socket that accommodates external cards, such as a subscriber identification module (SIM), a user identity module (UIM), and a memory card for storing information.

At least one antenna for wireless communication may be provided in the vehicular display device. The antenna may be embedded within the vehicular display device or formed in a casing. For example, an antenna that is a component of the broadcasting reception module 811 (refer to FIG. 2B) may be configured to be ejectable from the vehicular display device. Alternatively, the antenna may be formed as a film-type antenna and attached to the inner surface of a housing, and the casing formed of a conductive material may be configured to serve as an antenna.

The expression "the driving of the vehicle" disclosed below in the present specification may include: starting the vehicle after ignition; driving the vehicle at or above a predetermined speed; temporarily stopping the vehicle due to external conditions (e.g., waiting at a traffic signal, experiencing traffic congestion, and an equivalent thereof) during the course of driving; and driving the vehicle to perform a parking operation.

In addition, the expression "the stopping of the driving of the vehicle" may include: a state in which the ignition of the vehicle has not yet been turned on; a state in which the vehicle has not yet started to be driven; and a state in which a predetermined time has elapsed after a temporary stop during the course of driving.

In addition, the term "form factor transition" or "form factor change" disclosed in the present specification refers to a structural change of at least one of the plurality of displays, the structural change being caused by one of the following: relative movement, outward or inward protrusion, or raising or lowering motion. The term "form factor transition" or "form factor change" may include a state in which the form of only one of the plurality of displays is transitioned, and a state in which the forms of the plurality of displays are changed either sequentially or concurrently.

In addition, control of and display on the "plurality of displays" disclosed in the present disclosure are performed independently of each other. The "plurality of displays" disclosed in the present specification are located at the front of the same frame of the display device and take a structure that extends horizontally at the position of the vehicle's dashboard. Additionally, at least one of the "plurality of displays" disclosed in the present specification has a structure enabling independent relative movement or rotation, and, in this case, a greater variety of form factors may be formed depending on how the respective forms of the plurality of displays are formed.

Specifically, the plurality of displays are configured to include the first display 851a positioned to correspond to the position of the driver's seat, the third display 851c positioned to correspond to the position of the front passenger seat location, and the second display 851b positioned between the first and third displays 851a and 851c.

For example, the "first display" disclosed in the present specification may be a cluster. In addition, the "second display 851b" disclosed in the present specification may be referred to as a center information display (CID), and the "third display 851c" may be referred to as a passenger information display (PID).

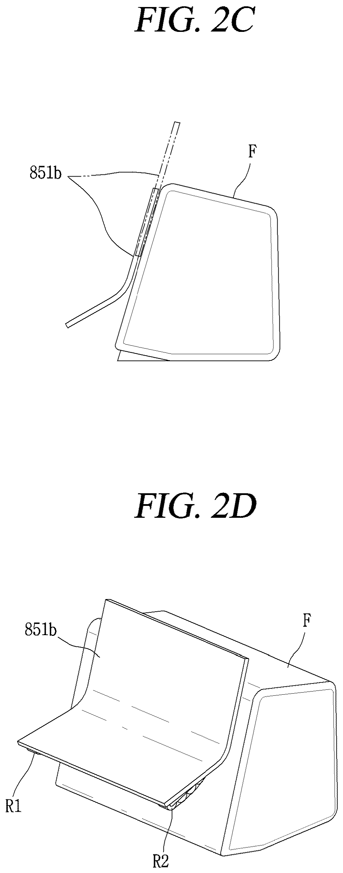

FIGS. 2C and 2D are views that are referenced to describe a specific operation of one display that is movable in the up-down direction and has a structure in which one portion thereof outwardly extends, for example, a specific operation of the second display 851b (or the CID) in the vehicular display device 800 according to the present disclosure.

First, with reference to FIG. 2C, the rear surface of the second display 851b is fixed to a frame F and vertically moves in response to a control signal, thereby undergoing relative movement.

In a case where the second display 851b moves along guide rails (not illustrated), thereby undergoing relative movement, the display surface flattens, thereby assuming a first form A.

In a case where the second display 851b slides downward along the guide rails (not illustrated) and rollers R1 and R2 underneath respective lower sides thereof, thereby undergoing relative movement, at least one portion of the display surface outwardly extends, thereby forming a second form B. Although not illustrated in FIG. 2C, the outwardly extending portion of the second display 851b may be positioned above the center. In addition, although not illustrated in FIG. 2C, the outwardly extending lower portion of the second display 851b may be supported on a triangular lower stand.

When a request for the form factor transition is made (or an event for the form factor transition occurs), the control unit 880 of the vehicular display device 800 analyzes and recognizes the form of the form factor included in the request, checks the driving situation of the vehicle, and generates a control command for transfer to the plurality of displays.

When a control command for a change to the second form B is received from the control unit 880 of the vehicular display device 800, the second display 851b slides downward, thereby enabling at least one portion thereof to outwardly protrude. When the second display 851b assumes the second form B in this manner, a touch operation is facilitated through the outwardly extending lower portion without obstructing the view of the driver who is driving the vehicle.

When a control command for a change to the first form A is received from the control unit 880 in a state where the second display 851b is in the second form B, the outwardly extending portion of the second display 851b is raised, thereby undergoing relative upward movement. In this manner, when the second display 851b assumes the first form A, screen distortion is eliminated, thereby enabling a large screen to be provided.

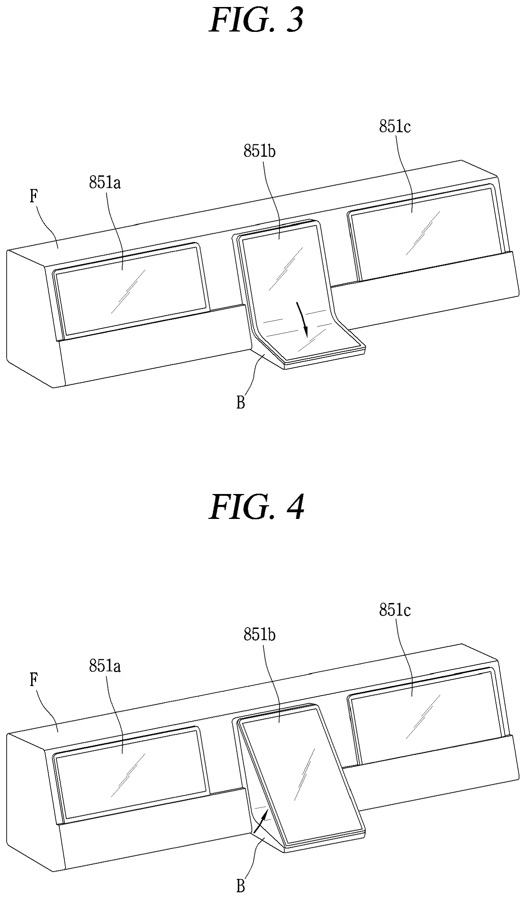

Although not illustrated in FIGS. 2C and 2D, the control unit 880 may include a curvature adjustment unit that is capable of changing the degree of bending of, that is, the degree of curvature of, the second display 851b. The curvature adjustment unit may change the degree of curvature in such a manner that the second display 851b is further bent or straightened in the up-down direction with respect to a stand B (in FIG. 3).

To this end, the control unit 880 may be positioned to extend in the direction of the rear surface of the frame and may include a display drive IC for driving the second display 851b. In addition, the curvature adjustment unit may further include a multiplicity of guide rails, a link, a link bracket, a bearing, a bending module, and equivalents thereof for changing the degree of curvature of the second display 851b in response to a signal received from the display drive IC.

Various examples in which the form factor of the display unit 851 is changed in response to a change in the form of at least one of the plurality of displays are described in detail below.

FIGS. 3 and 4 are views that are referenced to describe an example where the second display 851b is configured for either a first form factor or a second form factor.

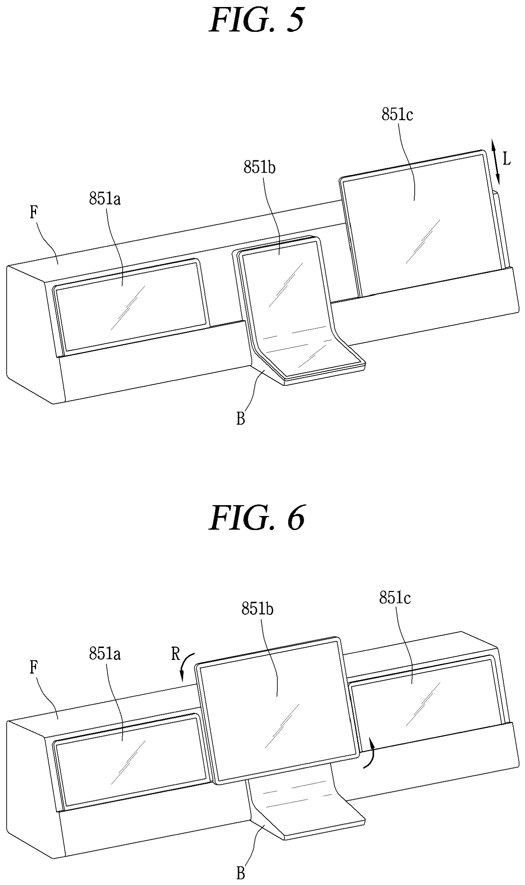

FIG. 5 is an exemplary view that is referenced to describe a form factor transition caused by a change in the size of the third display 851c.

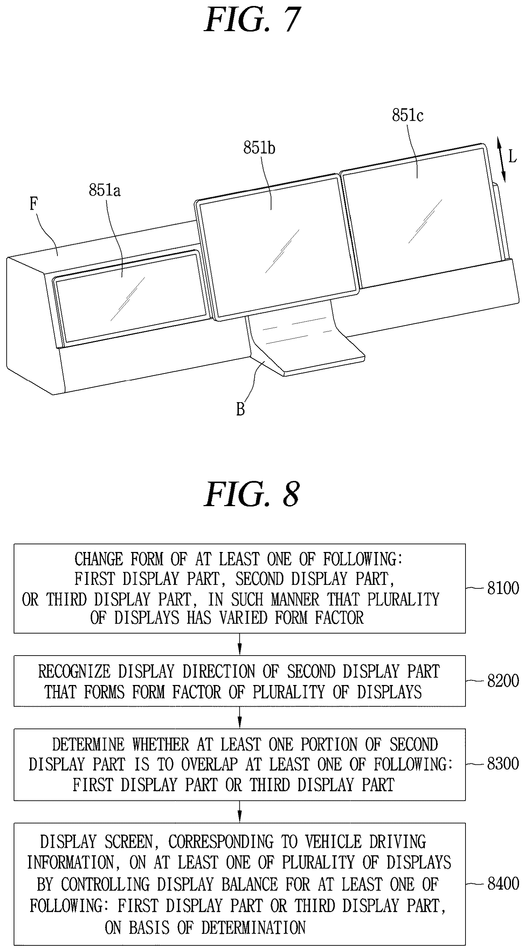

FIG. 6 is an exemplary view that is referenced to describe a form factor transition for changing the direction of the second display 851b. FIG. 7 is an exemplary view that is referenced to describe a form factor transition for additionally varying the size of the third display 851c in FIG. 6.

In illustrated embodiments, the first to third displays 851a, 851b, and 851c are fixed to the same frame F at the rear surfaces thereof and are positioned on the same horizontal line. In addition, although the first to third displays 851a, 851b, and 851c are illustrated as being spaced apart from one another for the convenience of explanation, in embodiments, the first to third displays 851a, 851b, and 851c may be serially connected to one another and used as a single expanded screen for seamless display.

First, a case where the vehicular display device 800 performs a transformation to form the first form factor and the second form factor is described in detail with reference to FIGS. 3 and 4.

FIG. 4 is a view illustrating the first form factor in which the display surface of the second display 851b is in a flat state.

When the vehicle comes to a stop, the display unit 851 of the vehicular display device 800 may be transformed to form the first form factor as illustrated in FIG. 4. At this point, the expression "the vehicle coming to a stop" may include: a state in which the vehicle has not yet been driven after ignition; a state in which the vehicle is parked; and a state in which the vehicle has been stopped for a predetermined time or longer during the course of driving.

In the first form factor, the display surface of the second display 851b is flat, and the second display 851b has moved upward with respect to a lower stand B, thereby undergoing relative movement. At this point, in a case where the second display 851b changes from the form illustrated in FIG. 3, the outwardly extending portion of the second display 851b may be raised, thereby moving upward along the plurality of rollers positioned between the second display 851b and the lower stand B. As the second display 851b moves upward, the upper surface of the second display 851b may be positioned above the height of the frame F. At this point, the first and third displays 851a and 851c may be positioned at a lower height than the second display 851b. In addition, as the second display 851b undergoes relative movement, at least one portion (e.g., the lower portion) of the lower stand B may be exposed.

In the first form factor, the second display 851b may be used entirely as a large screen. For example, in the first form factor, infotainment screens, such as a navigation screen, a menu screen, a movie screen, and an audio playback screen, may be displayed on the entire second display 851b. In addition, in the first form factor, the second display 851b, along with the other displays, namely, the first and third displays 851a and 851c, may be used as a single expanded screen or as a large screen associated with the same content, taking into consideration the current driving situation of the vehicle, in response to a request and according to the attributes of content.

FIG. 3 illustrates the second form factor in which at least one portion of the display surface of the second display 851b outwardly extends.

While the vehicle is driven, the display unit 851 of the vehicular display device 800 may perform a transformation to form the second form factor in which at least one portion of the second display 851b outwardly extends. At this point, the expression "the driving of the vehicle" may include: starting the vehicle after ignition; driving the vehicle while in a parking mode; driving the vehicle at a low speed; and temporarily stopping the vehicle due to external conditions (e.g., waiting for a traffic light, experiencing traffic congestion, and an equivalent thereof) during the course of driving.

In the second form factor, the second display 851b has moved downward with respect to the lower mount B, thereby undergoing relative movement, such that at least one portion of the display surface remains in a lowered state, that is, an outwardly extending state. At this point, the position of a region (hereinafter referred to as a "bending region") of the second display 851, in which bending occurs, may vary depending on the form and height of the lower stand B.

Display regions of the second display 851b, which are defined based on the bending region," may have an unequal surface to facilitate the stable form fact transition. For example, the second display 851b may be bent in such a manner that an upper region (hereinafter referred to as a "first region") thereof, defined based on the bending region, is larger in size than a lower region (hereinafter referred to as a "second region) thereof, also defined based on the bending region.

In the second form factor, content items with different attributes may be displayed in a distinguished manner on the first and second regions, respectively, of the second display 851b. In addition, an image may not be displayed on the bending region to eliminate image distortion, or ratio adjustment may be automatically performed for seamless display.

Specifically, requested or preset content or service screens may be displayed on the first region of the second display 851b, and an input screen (e.g., a control panel, a menu, a list, a keyboard, or an equivalent thereof) for a touch operation may be displayed on the second region of the second display 851b. The input screen of the second region may facilitate interaction with a screen displayed on the first region. In this case, when the second form factor is transitioned to the first form factor based on a control command, the input screen displayed in the distinguished second region may disappear, and the second display 851b may be automatically converted into a large screen.

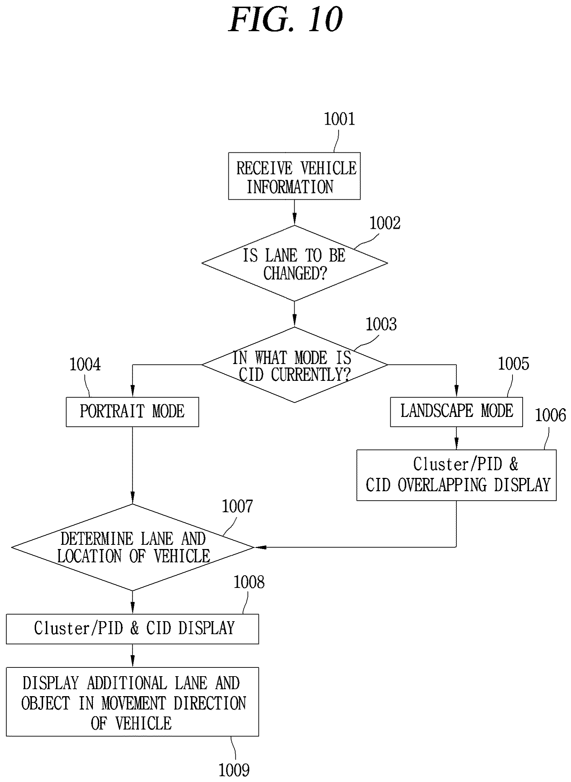

In the second form factor, the degree of curvature of the second display 851b may be changed. The form of the second display 851b may assume one of the following: a flat mode in which the display surface is flat; a first bending mode in which the second display 851b is bent to have a first curvature; or a second bending mode in which the second display 851b is bent to have a second curvature. An operation associated with a switch between the first bending mode and the second bending mode will be described in detail below with reference to FIG. 10.

When the second form factor is transitioned to the first form factor, the outwardly extending portion of the second display 851b may be raised, and thus the second display 851b may slide along the rollers on both sides thereof, thereby undergoing relative upward movement with respect to the lower stand B. At this point, the outwardly extending portion may be raised in proportion to the degree of the relative movement of the second display 851b.

When the second form factor is transitioned to the first form factor, content displayed on the second display 851b may vary. For example, in the second form factor, contracted content or service screens are provided in the first region of the second display 851b, and an input screen (e.g., a control panel such as a touch panel or a mouse panel) for interacting with the screen displayed in the first region may be provided in the second region. In this case, for example, a widget in a card format may be leftward or rightward in the first region on the basis of a touch input to the second region. Alternatively, a frequently used application or widget icon may also be displayed in the second region. Subsequently, when the second form factor is transitioned to the first form factor, an input screen in the second region of the second display 851b may disappear, and content or service screens displayed in the first region may be expanded to a full screen.

In addition, the transition to the second form factor may occur not only in response to a direct transition request based on the attributes of content or services, or on an input request, but also upon recognition of the need to use the third display 851c. At this point, the need to use the third display 851c may include both the intention to use by an occupant in the front passenger seat and the intention to use by the driver.

For example, when the need for the driver to use the third display 851c is detected (e.g., when the driver's gaze or an equivalent thereof is detected through the front camera) in a state of a first form factor, the display unit 851 may be transformed to assume the second form factor in such a manner that one portion (e.g., the second region) of the second display 851b is used as an input region. In this case, a previously displayed screen (e.g., a navigation screen) is displayed in a reduced form in the first region of the second display 851b, and an input screen for interacting with content (e.g., a widget, an application, or an equivalent thereof) displayed on the third display 851c may be displayed in the second region. Accordingly, if necessary, the driver may easily perform a screen operation on the third display 851c, which corresponds to the position of the front passenger seat.

Other examples of changing the form factor of the display unit 851 are described below. The example thereof may be referred to as a form factor transition (change) corresponding to a request for a transition to a third form factor, a form factor transition corresponding to a request for a transition from the second form factor, or, more generally, as a form factor transition.

FIG. 5 is a view that is referenced to describe a form factor transition that varies in the size of the third display 851c in the display device 800.

The third display 851c may be elevated in response to a control command from the control unit 880, thereby increasing the exposure area of the display surface and expanding the display size upward. In addition, the third display 851c may be lowered from the elevated state in response to a control command from the control unit 880, thereby decreasing the exposure area of the display surface and reducing the display size downward.

To this end, the third display 851c may include a first frame and a second frame. A flexible display module may be supported by the first frame and the second frame that is formed to undergo relative movement with respect to the first frame. In addition, the third display 851c may include a pair of sliders that guide the third display 851c to slide up and down, thereby enabling relative movement. At this point, although not described in detail, each slider of the pair may include a horizontal plate and a vertical plate that is outwardly bent along the inner edge of the horizontal plate, either angularly or in a curved manner. A " 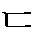 "-shaped guide rail may be included in the outer edge of the horizontal plate.

When the third display 851c is raised, the first and second frames move away from each other. After the pair of sliders moves together with the second frame, the guide rail is engaged with an insertion groove, thereby enabling the third display 851c to be held in an enlarged state. The third display 851c may have a variable length L, which is adjusted based on the attributes of the requested content or services and/or the input request, taking into consideration the driving situation of the vehicle. As the exposed area of the third display 851c gradually increases, the variable length L correspondingly changes. Accordingly, the content displayed on the third display 851c is expanded.

In a state where the variable length L of the third display 851c is contracted to a minimum, the upper end of the first display 851a and the upper end of the third display 851c may be positioned along the same line. In addition, in a state where the variable length L of the third display 851c is expanded to a maximum, the upper end of the third display 851c may be positioned at a higher point than any of the plurality of displays or may be positioned along the same line as the upper end of the second display 851b, which moves to the highest point thereof in a longitudinal mode.

In another example, the third display 851c may operate such that one portion of the display panel remains bent, for example, in a U-shape within the space of the frame, thereby enabling the display screen to be expanded or contracted. In this case, the entire third display 851c is not rolled up, and one portion thereof remains exposed at all times, thereby reducing the risk of panel damage.

FIG. 6 is an exemplary view that is referenced to describe a form factor transition for changing the display direction of the second display 851b. Additionally, FIG. 7 is an exemplary diagram that is referenced to describe a form factor transition for additionally changing the size of the third display 851c in the form factor illustrated in FIG. 6.

The second display 851b can perform a relative rotational movement (R) for changing the display direction in response to a control command from the control unit 880.

To this end, although not illustrated in detail, the second display 851b may include, on the rear surface thereof, constituent elements for changing the display direction to activate either the longitudinal mode or a transverse direction, such as one or more plates, a rotation shaft, a shaft, a bracket, a slider, and a motor for providing a rotational force.

For example, when a control command corresponding to a landscape mode is received from the control unit 880 of the vehicular display device 800 in response to the request for the form factor transition, a rotational force is generated and applied to the second display 851b in the horizontal direction (left-right direction), thereby changing the display direction to activate the transverse direction. In this case, the lower stand B may be fully or partially exposed, and both sides of the second display 851b may partially overlap the first and third displays 851a and 851c, respectively.

Similarly, when a control command corresponding to a portrait mode is received from the control unit 880 of the vehicular display device 800 in response to the request for the form factor transition, a rotational force is generated in such a manner as to be applied to the second display 851b in the vertical direction (up-down direction), thereby changing the display direction to activate the longitudinal direction. In this case, the second display 851b may be seamlessly connected to both sides of the first and third displays 851a and 851c.

The relative rotation of the second display 851b is performed independently of the above-described relative up-down movement (and the outward protrusion) of the second display 851b.

For example, in response to a control command, after the above-described transitions to the first form factor, the second display 851b may sequentially undergo a form factor transition for activating the landscape mode. Alternatively, for example, in response to a control command, after switching to the portrait mode, the second display 851b may is subsequently transformed for the above-described second form factor.

When a form factor transition is performed to activate the landscape mode, although not illustrated, the second display 851b may move a predetermined distance to the left or right.

The second display 851b may cover at least one portion of the first and third displays 851a and 851c when switching to landscape mode. For this reason, by selectively performing additional movement to the left or right during the relative rotation, the second display 851b may operate in such a manner as not to overlap at least one display.

Specifically, when receiving a request to change a form factor of the second display 851b to switch to the landscape mode, the control unit 880 may determine a display whose screen is not covered, taking into consideration display states of the first and third displays 851a and 851b, the attributes of displayed content, and the driving situation of the vehicle. Based on this determination, the control unit 800 may generate a control command by selecting a horizontal movement direction during relative rotational movement of the second display 851b.

With reference to FIG. 7, requests to transform the second display 851b and the third display 851c may be made sequentially or simultaneously. Alternatively, a request for transforming the third display unit 851c may be made in response to an additional input after the second display 851b is transformed.

Specifically, the second display 851b may switch to the landscape mode, and the form factor may be changed simultaneously or sequentially in such a manner that a variable length L of the third display 851c increases.

Alternatively, in a state of a form factor illustrated in FIG. 7, second display 851b may switch to the portrait mode, and the form factor may be changed simultaneously or sequentially in such a manner that the variable length L of the third display 851c decreases. This operation may refer to restoration to the first form factor and, for example, may be performed in response to a command to terminate the use of the vehicular display device 800.

According to an embodiment, sequential requests to change the form factor may be made to the second and third displays 851b and 851c, depending on the attributes of specific content or specific services. For example, when a screen expansion mode is selected from the third display 851c while the vehicle is in a stationary state, the second display 851b may switch to the landscape mode, and simultaneously or sequentially, a form factor transition for raising the third display 851c may be performed.

In this manner, the vehicular display device 800 according to the embodiment of the present disclosure may detect vehicle driving in a state where the second display 851b, among the plurality of displays, forms the flat first form factor and may perform a transition to the second form factor different from the first form factor. Subsequently, when a request to change the second form factor is made, the vehicular display device 800 performs a transition to a form factor corresponding to the request, after confirming that the change is feasible in view of the driving situation of the vehicle.

The term "plurality of displays" disclosed below is used to refer to either the display unit 851 of the vehicular display device 800 or the first to third displays 851a, 851b, and 851c.

The vehicular display device 800 (in FIG. 1) according to the present disclosure includes a plurality of displays as described above. Among the plurality of displays, the first display 851a corresponds to a cluster of a driver's seat, a third display 851c corresponds to the position of the front passenger seat, and the second display 851b is positioned between the first and third displays 851a and 851c, thereby forming a large screen.

At this point, at least one portion of the second display 851b has a structure that enables outward protrusion, upward or downward movement, and relative rotation, thereby varying the display direction. In addition, the third display 851c has a structure that enables the screen to vary in size in response to relative movement in the longitudinal direction. Various form factor transitions are possible by combining these structural forms of the second and third displays 851b and 851c.

A processor (or the control unit) 880 of the vehicular display device 800 may generate a control command for a form factor transition on the basis of each of the various situations, and may perform a form factor transition by transmitting the generated control command to the plurality of displays.

Specifically, the control unit 880 may transfer control signals for changing structural forms of the second and third displays 851b and 851c to corresponding modules, respectively, for a structural change operation. Accordingly, the second and third displays 851b and 851c operate to perform structural changes separately, sequentially, or simultaneously, thereby causing the form factor transition appropriate for the request.

As the display orientation of the second display 851b is changed, the form factor of the plurality of displays may be changed. As a result, the plurality of displays may have structural forms that result in overlap between at least two of them. Accordingly, various embodiments in which the overlapping of the plurality of displays due to the form factor transition is quickly recognized and a seamless screen display is performed are described below.

FIG. 8 is a representative flowchart that is referenced to describe a method of operating the vehicular display device that determines, based on recognition of the form factor of the plurality of displays, whether overlap is to occur between the displays. Unless otherwise specified, each step illustrated in FIG. 8 is assumed to be performed by the control unit 880 of the vehicular display device 800.

With reference to FIG. 8, the vehicular display device 800 according to the present disclosure may change the form of at least one of the following: the first display 851a, the second display 851b, or the third display 851c, in such a manner that a plurality of displays 851 has a varied form factor (8100).

The control unit 880 of the vehicular display device 800 can change the form factor of the plurality of displays by applying various drive commands to the second display 851b in such a manner that the form of the second display 851b is changed.

For example, when it is detected that the vehicle 100 is driven after ignition, the control unit 880 may control a transition from the first form factor in which the display of the second display 851b is in a flat state to the second form factor in which the second display 851b slides downward and one portion thereof outwardly extends.

In addition, for example, the control unit 880 may control the second display 851b according to the attributes of content or services to be displayed, in such a manner as to undergo relative rotation in a state where the center portion of the second display 851b is fixed to the main body. As a result, the second display 851b may form one form factor corresponding to either the landscape mode or the portrait mode.

A detailed driving operation for changing the form of the second display 851b may vary depending on the current state of the form factor of the plurality of displays.

For example, it is assumed that the request for the form factor transition that causes the second display 851b to switch to the landscape mode is received from the control unit 880. At this point, when one portion of the second display 851b outwardly extends in the portrait mode, a detailed driving operation for the form factor transition is performed. During this operation, the outwardly extending portion is sequentially (i) raised, (ii) moves upward, and (iii) undergoes relative rotation to switch to the landscape mode. When the display surface of the current second display 851b is in a flat state in the portrait mode, a detailed driving operation for the form factor transition is performed. During this operation, the outwardly extending portion undergoes only relative rotation for switching to the portrait mode.

When the form factor of the plurality of displays is changed in this manner, the control unit 880 may store the form of the display corresponding to the changed form factor. To this end, the control unit 880 may store the form information of each of the first to third displays 851a, 851b, and 851c that form the current form factor, in the memory or an equivalent thereof.

Upon receiving a request for content display, the control unit 880 may recognize the display direction of the second display 851b that forms the form factor of the plurality of displays (8200).

The control unit 880 may recognize whether the current display direction of the second display 851b is in the landscape mode or the portrait mode.

In some embodiments, the control unit 880 may determine, on the basis of the current display direction of the second display 851b, whether to switch to either the landscape mode or the portrait mode. When it is determined that the current display direction of the second display 851b needs to be switched, the control unit 880 may transmit a drive command for rotating the second display 851b.

When the current display direction of the second display 851b is recognized in this manner, the control unit 880 may determine whether at least one portion of the second display 851b is to overlap at least one of the following: the first display 851a or the third display 851c (8300).

That is, depending on whether the second display 851b is in the landscape mode or the portrait mode, it may be determined whether at least one portion of the second display 851b is to overlap at least one of the following: the first display 851a or the third display 851c, or whether at least one portion thereof is to be connected, side by side, to at least one of the following: the first display 851a or the third display 851c, without overlapping.

When the second display 851b forms a form factor for the portrait mode, in terms of structural form, the second display 851b is arranged side by side with the first and third displays 851a and 851c without overlapping.

At this point, this arrangement in terms of structural form does not refer to an arrangement of the first to third displays 851a, 851b, and 851c on the same plane in the horizontal direction. For example, taking into account rotational movement, the second display 851b may be arranged to be positioned a predetermined distance ahead of the first and third displays 851a and 851c with respect to the front surface of the display,

When the second display 851b forms a form factor for the landscape mode, in terms of structural form, the second display 851b overlaps one portion of at least one of the following: the first display 851a or the third display 851c.

The second display 851b forms a form factor for the portrait mode, the length in the horizontal direction (left-right direction) of the second display 851b is equal to or smaller than a separation distance between the first and third displays 851a and 851c, thereby resulting in an overlapping portion. In addition, when the second display 851b forms the form factor for the landscape mode, the length in the vertical length (up-down direction) of the second display 851b is greater than the separation distance between the first and third displays 851a and 851c, thereby resulting in a portion that overlaps at least one display.

According to the present disclosure, the second display 851b is arranged to be positioned ahead of the first and third displays 851a and 851c with respect to the front surface of the display in such a manner that the second display 851b is enabled to undergo relative rotation in response to a request for a form factor transition. Therefore, the second display 851b overlaps at least one of the following: the first display 851a or the third display 851c, each of which is positioned behind the second display 851b.

In some embodiments, in a state of the form factor in which the second display 851b is positioned in the portrait mode, a detailed driving operation is performed. During this operation, the second display 851 is retracted behind the front surface of the display after rotational movement to switch to the portrait mode, in such a manner that the second display 851b is connected flatly in the horizontal direction to the first and third displays 851a and 851c. However, in this case, in order for the second display 851b to form the form factor for the landscape mode, a detailed driving operation needs to be performed. During this operation, the second display 851b undergoes relative rotation for switching to the portrait mode after being ejected forward, by a predetermined distance, from the front surface of the display.

It is determined in this manner whether overlap is to occur due to the display direction (or the form factor for the landscape or portrait mode) of the second display 851b. On the basis of this determination, the control unit 880 controls display balance for at least one of the following: the first display 851a or the third display 851c. Then, the control unit 880 displays a screen, corresponding to vehicle driving information, on at least one of the plurality of displays (S8400).

Specifically, when the second display 851b, that is, the CID, is positioned in the portrait mode, the control unit 880 determines that overlap does not occur. Moreover, when expanded content is output on at least one of the following: the first display 851a or the third display 851c, display balance may be achieved by performing image control to prevent any visual mismatch at the boundary of the corresponding display.

In addition, when the CID is positioned in the landscape mode, the control unit 880 determines that the second display 851a overlaps one portion of each of the first and third displays 851a and 851c. Moreover, the control unit 880 may process a screen displayed in an overlapping region of each of the first and third displays 851a and 851c. When the expanded content is output in a region other than the overlapping region, the control unit 800 may achieve display balance by performing image control to prevent visual mismatch at the boundary of the corresponding display and the boundary of the overlapping region.

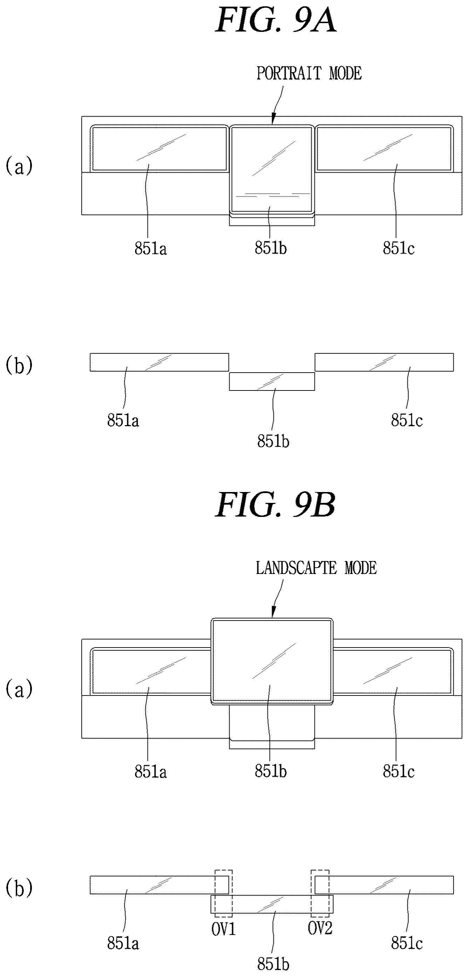

FIGS. 9A and 9B are views that are referenced to describe a situation in which, in a case where the second display 851b forms the form factors for the portrait mode and the landscape mode in the vehicular display device 800, the second display 851b overlaps another display.

According to the present disclosure, the second display 851b is configured to undergo relative rotation with respect to the main body in response to a control signal from the control unit 880, thereby changing the display direction in accordance with an operation mode corresponding to either the landscape mode or the portrait mode.

When a control signal for changing the form of the plurality of displays is generated by the control unit 880, information about an operation mode corresponding to the display direction of the second display 851b, which forms the form factor of the plurality of displays, is stored in the memory.

At this point, the operation mode corresponding to the display direction of the second display 851b involves relative rotational movement of the second display 851b to switch to the landscape mode in which the display extends over a long distance in the horizontal direction or to switch to the portrait mode in which the display extends over a long distance in the vertical direction. In addition, the information about the operation mode includes data for identifying whether the form of the display corresponds to the portrait mode or the landscape mode.

The plurality of displays, including the second display 851b according to embodiments of the present disclosure, may have a wing-type structural characteristic. That is, the wing-type structural characteristic refers to a configuration in which is that the second display 851b serves as the main body, and the first and third displays 851a and 851c serve as left and right wings, respectively.

Specifically, among the plurality of displays, the second display 851b is arranged to be serially connected to the first and third displays 851a and 851c such that these three displays 851a, 851b, and 851c appear to form a single display. In terms of structural form, the second display 851b is arranged to be positioned a predetermined distance ahead of the first and third displays 851a and 851c with respect to the front surface of the display.

In accordance with the characteristics of this structural form, in a certain operation mode resulting from the relative rotation of the second display 851b, the second display 851b partially overlaps the first and third displays 851a and 851c.

While the second display 851b operates in the portrait mode after undergoing relative rotation, the second display 851b does not overlap the first and third displays 851a and 851c.

FIG. 9A illustrates a form factor structure in which the second display 851b is positioned in the portrait mode. When viewed from the front ((a) of FIG. 9A), the second display 851b in the portrait mode and the first and third displays 851a and 851c positioned on both sides thereof, respectively, appear as a single connected screen. This is because, when the second display 851b undergoes the form factor transition in the portrait mode, the display slides downward such that the second display 851b has the same height as the first and third displays 851a and 851c along the same line. When viewed from above ((b) of FIG. 9A), it can be seen that the second display 851b, which is positioned in the portrait mode, does not overlap the first and third displays 851a and 851c. At this point, as illustrated in FIG. 9A, the second display 851b in the portrait mode may be structurally arranged to be positioned a predetermined distance ahead of the other displays, namely, the first and third displays 851a and 851c, but is not limited thereto. For example, after the second display 851b switches to the portrait mode, as a detailed driving operation, the second display 851b may undergo relative backward movement with respect to the front surface of the display, thereby being aligned with the first and third displays 851a and 851c along the same line in the horizontal direction.

While the second display 851b operates in the landscape mode after undergoing relative rotation, the second display 851b partially the first and third displays 851a and 851c.

FIG. 9B illustrates a form factor structure in which the second display 851b is positioned in the landscape mode. When viewed from the front ((a) of FIG. 9B), the second display 851b, which is positioned in the landscape mode, appears as a large screen in comparison with the first and third displays 851a and 851c positioned on both sides thereof, respectively. However, even in this case, the first, second, and third displays 851a, 851b, and 852c may appear as a single connected screen. When viewed from above ((b) of FIG. 9B), it can be confirmed that the second display 851b overlaps the first and third displays 851a and 851c, thereby resulting in overlapping regions OV1 and OV2.

The overlapping regions OV1 and OV2 refer to a first overlapping region OV1 and a second overlapping region OV2, respectively. The first overlapping region OV1 is positioned to the right of the first display 851a and is hidden from view by the second display 851b. The second overlapping region OV2 is positioned to the left of the third display 851c and is hidden from view by the second display 851b.

In accordance with the characteristics of the form structure of the second display 851b, the overlapping regions OV1 and OV2, resulting from the overlap, are to be formed only in the first and third displays 851a and 851c which are positioned behind the second display 851b.

In another embodiment, the overlapping region may be formed only in one of the following: the first display 851a or the third display 851c. The overlapping region may be formed, for example, when one of the following: the first display 851a or the third display 851c, or the second display 851b is driven to move further in the horizontal direction.

In another embodiment, the overlapping region may be alternately formed at the first and third displays 851a and 851c. At this point, the display where the overlapping region is formed may be determined by the movement and the movement direction of the second display 851b.

In this manner, when displaying content, screen control varies depending on whether overlap is to occur among the plurality of displays.

Specifically, when an operation mode of the second display 851b corresponds to the portrait mode, the control unit 880 determines that one portion of the second display 851b does not overlap the first and third displays 851a and 851c.

For example, as illustrated in FIG. 9A, since the second display 851b does not have an overlapping region, resulting from the overlap, in the form factor for the portrait mode, the same content, the same type of content, or a different type of content may be displayed on each of the plurality of displays. Alternatively, screen control is performed to seamlessly connect the boundaries of the displays such that expanded content is displayed, as a single item of content, across the plurality of displays.

In contrast, when the operation mode of the second display 851b corresponds to the landscape mode, the control unit 880 determines that one portion of the second display 851b overlaps at least one of the following: the first display 851a or the third display 851c, and controls display balance for the overlapping region, resulting from the overlap.

For example, as illustrated in FIG. 9B, when the second display 851b forms the form factor for the landscape mode, display balance is additionally performed for the overlapping regions OV1 and OV2, resulting from the overlap. For example, control needs to be performed in such a manner that (i) no image is displayed in the overlapping regions OV1 and OV2, and/or that (ii) a content screen starting from the boundary between the overlapping region OV1 or OV2 and a non-overlapping region is visually continuous with a screen displayed on the second display 851b.

According to an embodiment, in the form factor in which the second display 851b is positioned in the landscape mode, the control unit 880 may control switching to a deactivated state in such a manner that a content screen is not displayed on the overlapping regions of the first and third displays 851a and 851c, which are caused by the second display. At this point, because an image is not displayed in the deactivated state, the overlapping region may be referred to as an inactive region, and the non-overlapping region may have the same meaning as the active region.

At this point, if the form factor of the second display 851b is changed and switched to the portrait mode, the control unit 880 may switch the previous overlapping regions of the first and second displays 851a and 851c to an active state. Accordingly, the content screen displayed before overlap occurs may be displayed again.

The control unit 880 may display, in an expanded format, a screen corresponding to vehicle driving information, derived from the sensing data from the vehicle, on at least one of the following: the first display 851a or the third display 851c, excluding the overlapping regions, and on the second display 851b.

In this case, the control unit 880 may perform compensation control in accordance with a difference in driving time between a region surrounding the overlapping region OV1 or OV2 and the other display in such a manner that a content screen starting from the boundary between the overlapping region OV1 or OV2 and the non-overlapping region is visually continuous with a screen displayed on the second display 851b. For example, synchronization may be accomplished through adjustment of the display driving time for one of the displays. In addition, for example, screen control for alleviating a burn-in phenomenon of a region surrounding the overlapping region OV1 or OV2 may be additionally performed.

Specific embodiments of a method of displaying content, the method being associated with whether overlap is to occur due to the structural form of the second display 851b occurs are described below.

First, the control unit 880 of the vehicular display device 800 may detect a specific driving situation on the basis of the vehicle driving information received through the communication unit and may determine, based on the detected driving situation, whether the display direction of the second display 851b is to be changed, thereby varying the form factor of the plurality of displays.

At this point, the detected driving situation may refer to a predetermined specific driving situation. Specifically, the detected driving situation may be either a lane change or parking operation of the vehicle, each of which is predicted on the basis of vehicle driving information (e.g., the sensing data from the vehicle, OBD data, or equivalents thereof) received through the communication unit.

Subsequently, based on the determination, the control unit 880 may generate a control signal to change the display direction of the second display 851b or may simply recognize the current display direction while the current display direction is maintained.

The control unit 880 may recognize the display direction of the second display 851b and may accordingly determine whether overlapping regions, resulting from the overlap, are formed on the first and third displays 851a and 851c, respectively.

Display balance is performed differently depending on whether an overlapping region is present during display expansion. Specifically, in a case where overlap occurs based on the operation mode of the second display 851b, the control unit 880 performs display balance for the first and third displays 851a and 851c in such a manner that information associated with the detected driving situation is displayed in a display region instead of the overlapping region.

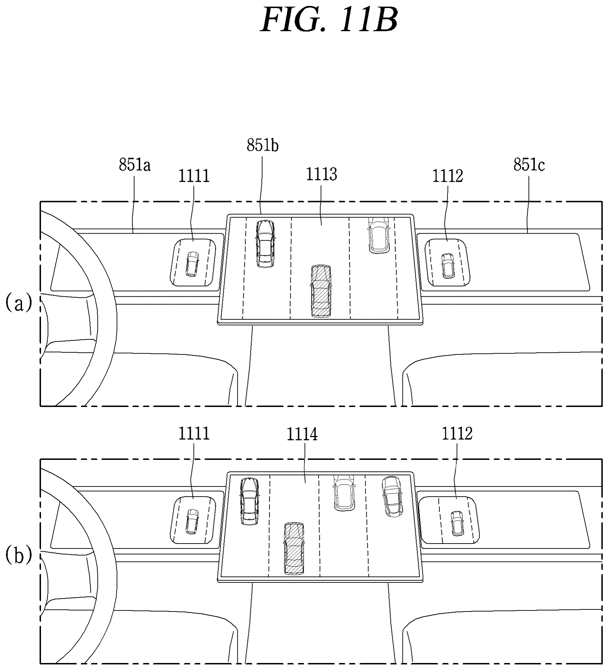

FIGS. 10, 10A, and 11B are a flowchart, a conceptual diagram, and a conceptual diagram, respectively, that are referenced to describe a method of displaying a guide screen for a lane change in accordance with the form factor of the second display 851b during the lane change in the vehicular display device according to the present disclosure.

First, with reference to FIG. 10, while the vehicle is being driven, the vehicular display device 800 may receive the vehicle driving information, for example, the vehicle driving information collected on the basis of vehicle data sensed through the OBD, the ECU, the camera sensor, the LiDAR, the radar, and equivalents thereof (1001).

Based on the received vehicle driving information, it may be determined whether a driving situation, in which a lane change is predicted, has occurred (1002). For example, a lane change may be predicted based on turn-signal information or vehicle destination or path information.

In this case, by recognizing the display direction of the second display 851b (hereinafter referred to as the "CID"), the vehicular display device 800 may determine whether the current operation mode of the CID corresponds to the form factor for the landscape mode or the form factor for the portrait mode (1003).

To this end, current information about the form of the second display 851b, for example, information regarding changing of the display direction of the second display 851b, which is stored in the memory or an equivalent thereof, may be checked.

The control unit 880 of the vehicular display device 800 may determine not to change the display direction of the second display 851b based on a lane change predicted from the detected driving situation. That is, the control unit 800 maintains the current display direction of the CID and simply checks the display direction.

Then, the control unit 800 controls the display of the guide screen for the lane change, taking into consideration the overlapping regions of the first and third displays 851a and 851c, which are formed in accordance with the current display direction of the second display 851b.

Specifically, in FIG. 10, when the operation mode of the CID corresponds to the portrait mode (1004), since no overlapping region is present, a target lane is immediately recognized on the basis of the current location of the vehicle and the lane (1007). Moreover, display balance for display expansion is performed.

In contrast, in FIG. 10, when the operation mode of the CID corresponds to the landscape mode (1004), an overlapping region is present due to overlap, and thus display balance is performed for the overlapping region of at least one of the following: the first display 851a (hereinafter referred to as the "cluster") or the third displays 851c (hereinafter referred to as the "PID"), the overlapping region being caused by the CID (1006).

Specifically, the control unit 880 may control the overlapping region to enter a deactivated state, and perform control for compensation for a difference between display driving time in such a manner that overlapping and visual mismatch do not occur at the boundary between the non-overlapping region and the overlapping region.

In this manner, after performing display balance for the overlapping region, the control unit 880 proceeds to Step S1007 to immediately recognize the target lane on the basis of the current location of the vehicle and the lane (1007).

In some embodiments, on the basis of the received vehicle driving information, the control unit 880 may recognize the driving lane and the target lane that correspond to the current location of the vehicle. In addition, based on the current display direction of the second display 851b, the control unit 880 may determine whether to extend the guide screen for the lane change to at least one of the first and third displays 851a and 851c.

During display expansion, screen control is performed to output the guide screen for the lane change on the cluster and/or the PID or CID, as a common operation for both the form factors in the portrait and landscape modes of the CID (1008).

At this point, the guide screen for the lane change may be a front-view image collected through an external camera of the vehicle, the ADAS, or an equivalent thereof, or may be an AR graphic image superposed onto the front-view image.

Moreover, an additional lane that is aligned with the movement direction of the vehicle, the target lane, and a surrounding object are displayed (1009).

At this point, display balance may be performed to seamlessly extend the display of the additional lanes, the target lane, and the surrounding object on (i) the CID and the cluster, (ii) the CID and the PID or CID, and (iii) the CID, the cluster, and the PID. For example, screen control may be performed to compensate for a difference between display driving times and to suppress a burn-in effect in such a manner that screen overlapping and visual mismatch do not occur at the boundary between the expanded displays.

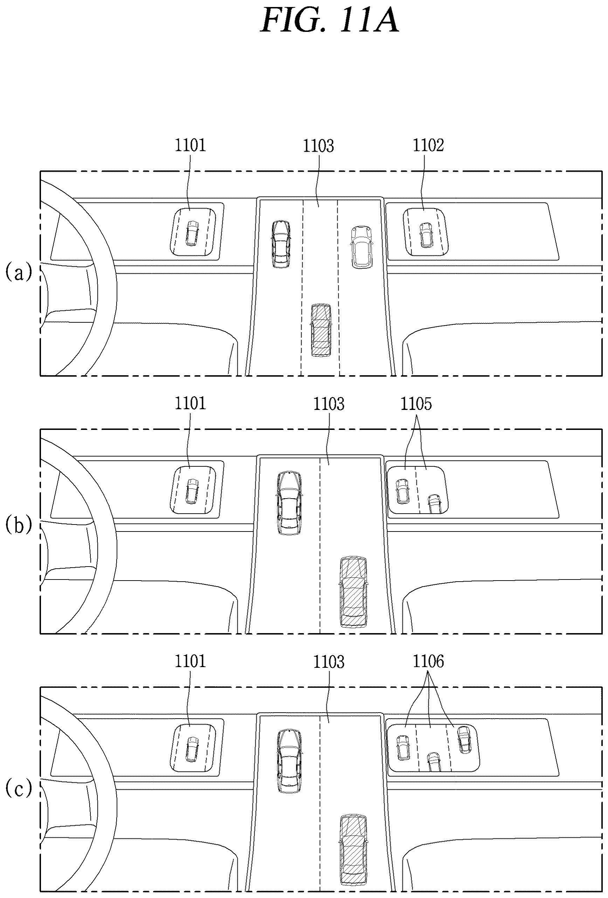

FIG. 11A illustrates that the guide screen for the lane change is displayed in the state of the form fact in which the CID 851b is positioned in the portrait mode.

In the state of the form factor in which the CID 851b, that is, the second display, is positioned in the portrait mode, the control unit 880 of the vehicular display device 800 may make a determination in such a manner that the guide screen is expanded up to either the cluster 851a, that is, the first display, or the PID 851c, that is, the third display, each of which is positioned in a direction aligned with the target lane. Subsequently, the control unit 880 may perform display balance in such a manner that the expanded guide screen is displayed as one screen that includes the driving lane of the vehicle and the target lane, which are connected to each other.

FIG. 11A illustrates a case where the target lane is located to the right of the current location of the vehicle.

In this case, a first screen 1103 including the current driving lane of the vehicle and the nearby lane may be displayed on the CID 851b, and second and third screens 1101 and 1102, which correspond to the left and right side mirrors aligned with the positions of the cluster 851a and the PID 851b, may be displayed on the cluster 851a and the PID 851b, respectively (in (a) of FIG. 11A).

When the direction of the target lane corresponds to the PID 851b, a guide screen 1105 expanded from the PID 851b is displayed across the PID 851b as the vehicle moves (in (b) of FIG. 11A). To this end, a screen 1102 corresponding to the right side mirror may be used. In addition, display balance, such as image alignment, may be performed in such a manner that overlap and visual mismatch do not occur between the first screen 1103, which includes the driving lane, and the expanded guide screen 1105, which does not include the target lane.

In addition, an additional progressively expanded screen 1106 may be displayed in a region (e.g., a lane adjacent to the target lane, a surrounding object, or an equivalent thereof), surrounding the target lane, which is included in the guide screen 1105 expanded in accordance with the current location and driving speed of the vehicle ((c) of FIG. 11A). At least two lanes including the target lane may be included in the additional expanded screen 1106.

FIG. 11B illustrates that, in a state of the form factor in which the CID 851b is positioned in the landscape mode, the guide screen for the lane change is displayed, taking into consideration the overlapping region.

In the state of the form factor in which the CID 851b, that is, the second display is positioned in the landscape mode, by further considering information about a distance between the driving lane and the target lane, the control unit 880 of the vehicular display device 800 may determine whether to expand the guide screen for the lane change to at least one of the following: the cluster 851a, that is, the first display, or the PID 851c, that is, the third display.

In FIG. 11B, a guide screen 1113, including both the current driving lane and the target lane, is displayed on the CID 851b. Then, screens 1111 and 1112, which correspond to the left and right side mirrors, are displayed on the cluster 851a and the PID 851c, respectively ((a) of FIG. 11B). At this point, the overlapping region of each of the cluster 851a and the PID 851c is controlled to enter a deactivated state.

Even if the number of lanes displayed increases with the movement of the vehicle, a lane-expanded guide screen 1114 may be displayed on the CID 851b as long as the number of lanes does not exceed a predetermined number.

In another embodiment, a guide screen expanded up to another display corresponding to the direction of the target lane may be displayed similarly to that illustrated in FIG. 11A. In this case, taking into consideration the boundary of the overlapping region, display balance may be performed to compensate for a difference between display driving times and to suppress a burn-in effect in such a manner that the expanded guide screen appears as one screen that includes the driving lane of the vehicle and the target lane, which are connected to each other.

In another embodiment, when a separation distance from the current location of the vehicle to the target lane reaches or exceeds a preset range, the guide screen for the lane change may be expanded to and displayed on at least one of the following: the first display, that is, the cluster 851a, or the third display, that is, the PID 851c, even in the state of the form factor in which the second display, that is, the CID 851b, is positioned in the landscape mode. At this point, the preset range refers to a range that corresponds to, for example, 4 or 5 lanes.

Specifically, in the state of the form factor in which the second display 851b is positioned in the landscape mode, when the distance between the driving lane and the target lane falls within the preset range, the guide screen may be displayed only on the second display 851b.

Conversely, when the distance between the driving lane and the target lane exceeds the preset range, the guide screen may be expanded up to and displayed on the display in the direction corresponding to the target lane, for example, the PID 851c.

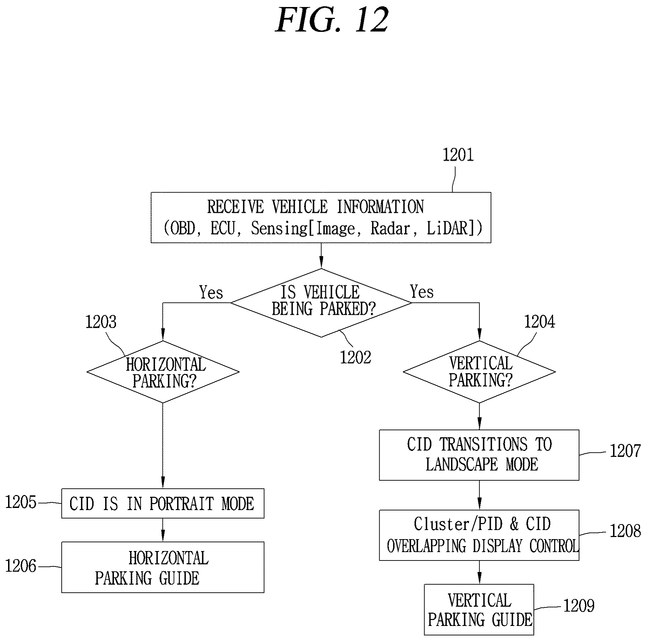

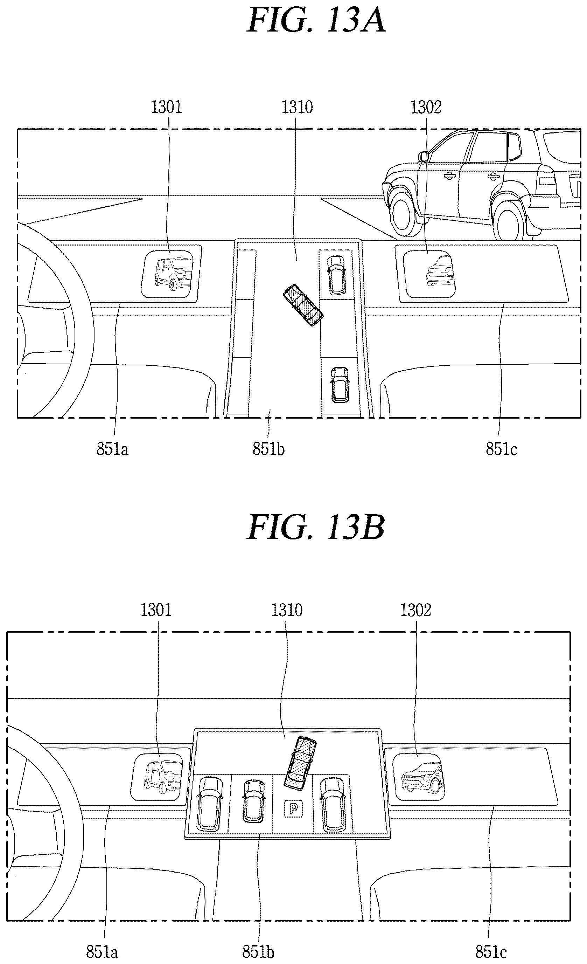

FIGS 12, 13A, and 13B are a flowchart, a conceptual diagram, and a conceptual diagram, respectively, that are referenced to describe a method of determining whether to change the form factor of the second display in accordance with a parking mode when parking the vehicle and of displaying a parking guide screen corresponding to a selected parking mode.

First, with reference to FIG. 12, the vehicular display device 800 may receive the vehicle driving information derived from the sensing data from the vehicle, while the vehicle is being driven (1201).

At this point, the sensing data from the vehicle may include, for example, data from the OBD, the ECU, the camera sensor, the LiDAR, the radar, and equivalents thereof. The vehicle driving information may refer to various driving situations recognized on the basis of the sensing data from the vehicle.

The control unit 880 of the vehicular display device 800 may determine, based on the driving situation derived from the vehicle driving information, whether the vehicle is being parked (1202). For example, the control unit 880 may determine, on the basis of the driving speed of the vehicle, front-view and rear-view images from the cameras, and equivalents thereof, whether the vehicle is being parked in a parking space.

When it is recognized that the vehicle is being parked, the parking mode corresponding to an available parking space may be selected on the basis of the vehicle driving information.

According to an embodiment, the control unit 880 may determine whether to perform a form factor transition in which the display direction of the second display 851b is changed, by recognizing the display direction of the second display 851b that forms the form factor of the plurality of displays.

In a case where the vehicle operates in a horizontal parking mode suited to the available parking space (1203), the state of the form factor in which the second display, that is, the CID 851b, is positioned in the portrait mode is maintained (1205), and a guide screen for horizontal parking is displayed (1206).

In contrast, in a case where the vehicle operates in a vertical parking mode suited to the available parking space (1204), the second display, that is, the CID 851b, switches to the form factor for the landscape mode (1207).

When the CID 851b switches to the form factor for the landscape mode in this manner, an overlapping region, resulting from the overlap, is formed. Because of this, display balance is performed for the overlapping regions of the cluster 851a and/or the PID 851c (1208).

Specifically, the overlapping regions of the cluster 851a and/or the PID 851c are switched to a deactivated state, and screen control (e.g., screen control or an equivalent thereof for compensating for a difference between display driving times and suppressing a burn-in effect) is performed in such a manner that overlapping and visual mismatch do not occur between the image displayed at the boundary between the overlapping region and the non-overlapping region and the image displayed on the CID 851b.

Next, a guide screen 1209 for vertical parking is displayed on the CID 851b.

FIG. 13A illustrates a guide screen displayed in a horizontal parking mode (parallel parking mode) is displayed, and FIG. 13B illustrates a guide screen displayed in a vertical parking mode (vertical parking mode).

In the horizontal parking mode in FIG. 3A, it is determined that the available parking space is dedicated to parallel parking. In this case, in the state of the form factor in which the CID 851b is positioned in the portrait mode, a horizontal-parking guide screen 1310 for horizontal parking is displayed on the CID 851b. At this point, side mirror screens 1301 and 1302, aligned with the respective positions of the cluster 851a and the PID 851c, may be displayed on the cluster 851a and the PID 851c, respectively.

In the vertical parking mode in FIG. 13B, it is determined that the available parking space is dedicated to vertical parking. In this case, in the state of the form factor in which the CID 851b is positioned in the landscape mode, a vertical parking guide screen 1310 is displayed on the CID 851b in a horizontal mode form factor. At this point, the overlapping regions of the cluster 851a and PID 851c are deactivated, and the side mirror screens 1301 and 1302, aligned with the respective positions of the cluster 851a and the PID 851c, may be displayed in active regions other than the overlapping regions. That is, display balance is performed in such a manner that the side mirror screens 1301 and 1302 are displayed in regions other than the overlapping regions, resulting from the overlap caused by the CID 851b.

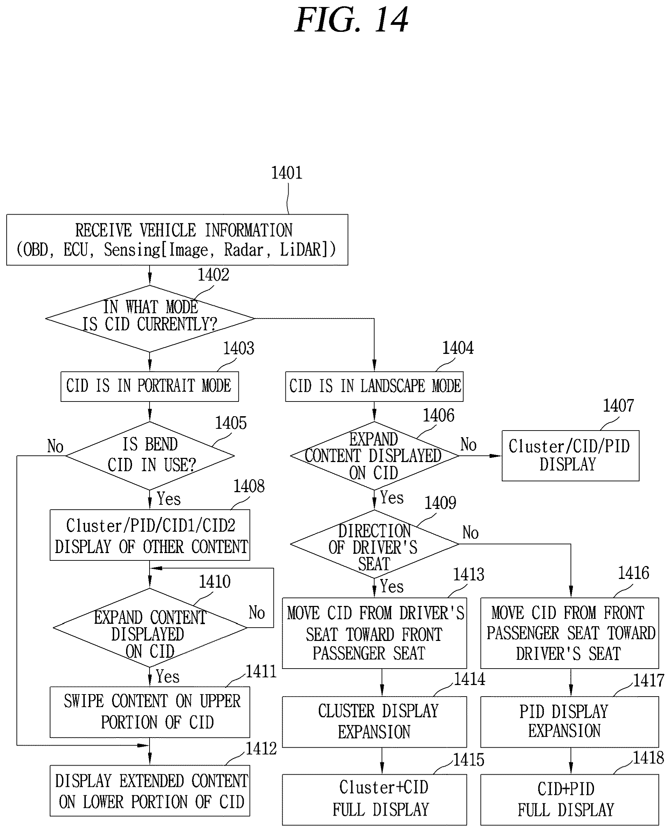

FIG. 14 is a flowchart that is referenced to describe a method of further driving the second display 851b depending on the current form factor of the second display 851b and whether to display content in an expanded manner, and a method of displaying content in the vehicular display device according to the present disclosure.

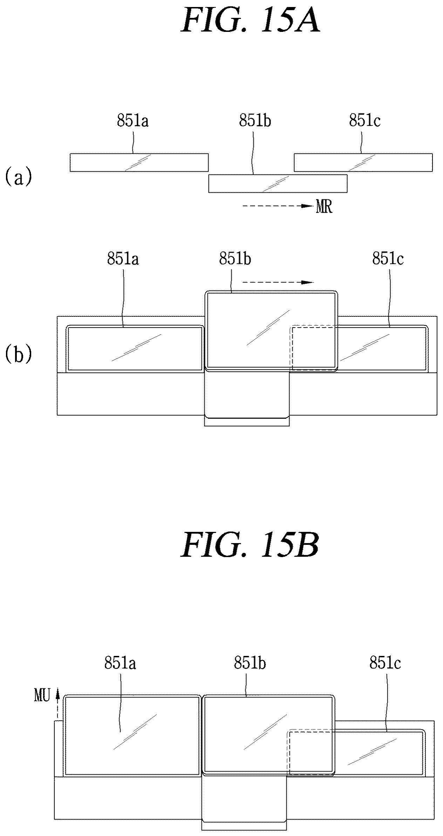

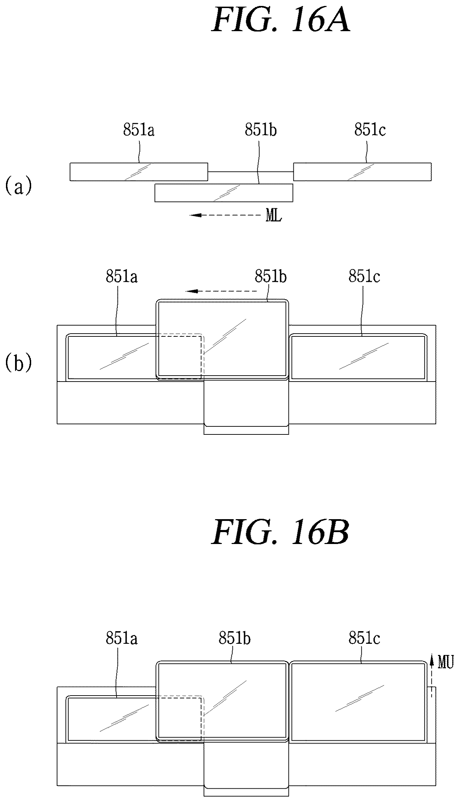

In addition, FIGS. 15A, 15B, 16A, and 16B are conceptual diagrams illustrating various embodiments in which content is expanded and displayed without causing overlap between the displays in the vehicular display device according to the present disclosure.

According to an embodiment, the second display is structurally configured to undergo further relative movement in the horizontal direction in the state of the form factor for the landscape mode, in response to a control signal. For example, in response to the request for the form factor transition, when the second display 851b switches from the portrait mode to the landscape mode, the second display 851b may undergo relative rotation to switch to the form factor for the landscape mode and then undergo relative movement in a direction approaching one of the following: the first display 851a or the third display 851c.

To this end, the second display 851b may further include, as constituent elements for relative rotational movement, a slider and a horizontal movement element for further movement in the horizontal direction, in addition to the one or more plates, the rotation shaft, the shaft, the bracket, the slider, and the motor for providing a rotational force.

In addition, the control unit 880 may transmit a control signal to the second display 851b in such a manner that the second display 851b further moves in the horizontal direction after switching to the landscape mode.

For example, after undergoing relative rotation to switch to the form factor for the landscape mode, the second display 851b may move in the direction of the first display 851a (the direction in which the second display 851b gradually approaches and overlaps the first display 851a), thereby progressively moving away from the third display 851c. This relative movement in the horizontal direction is terminated when overlap no longer occurs between the second display 851b and the third display 851c. As a result, the second display 851b and the third display 851c, which are positioned in the landscape mode, have a seamlessly connected structural form.

For addition, for example, after undergoing relative rotation to switch to the form factor for the landscape mode, the second display 851b may move in the direction of the third display 851c (the direction in which the second display 851b gradually approaches and overlaps the third display 851c), thereby progressively moving away from the first display 851a. This relative movement in the horizontal direction is terminated when overlap no longer occurs between the second display 851b and the first display 851a. As a result, the second display 851b and the first display 851a, which are positioned in the landscape mode, have a seamlessly connected structural form.

With reference to FIG. 14, the control unit 880 of the vehicular display device 800 may receive the vehicle driving information derived from the sensing data from the vehicle, while the vehicle is being driven (1401).

At this point, the sensing data from the vehicle may include, for example, data from the OBD, the ECU, the camera sensor, the LiDAR, the radar, and equivalents thereof. The vehicle driving information may refer to various driving situations recognized on the basis of the sensing data from the vehicle.

By checking the current state of the form factor, the control unit 880 may recognize whether the operation mode of the second display 861b, that is, the operation mode of the CID, corresponds to the landscape mode or the portrait mode (1402).

When the CID is positioned in the portrait mode (1403), it is determined whether the CID is bent at the bending region and is in use (1405). When the bent CID is in use, different content screens (or different control screens) may be independently displayed on a first region CID1 over the bending region of the CID 851b and a second region (CID2) under the bending region thereof, as well as on the cluster 851a and the PID 851b, among the plurality of displays (1408).

For example, a navigation screen may be displayed in the first region CID1 of the CID 851b, and a HVAC control screen may be displayed in the second region CID2 of the CID 851b.

In addition, for example, an entertainment widget and infotainment information may be displayed in the first region CID1 of the CID 851b, and the navigation screen may be displayed in the second region CID2 of the CID 851b.

In this state, when a request for content expansion is made from the CID (1410), a swipe input applied to an upper end portion CID1 of the CID is detected (1411), and expanded content may be displayed on a lower end portion CID2 of the CID (1412). That is, associated content items may be respectively displayed in the first region CID1 of the CID 851b and the second region CID2 thereof.

For example, short-distance navigation content (or AR navigation content) displayed in the first region CID1 of the CID 851b may be expanded into entire path navigation content across the second region CID2.

Additionally, as an example, specific entertainment, music information, widget information, and equivalents thereof may be displayed in the first region CID1 of the CID 851b, and detailed information about the content selected from or displayed in the first region CID1 may be displayed in the second region CID2.

When the CID is positioned in the landscape mode (1403), it is determined whether a request for display expansion of content displayed on the CID has been made (1406).

When there is no request for display expansion, only the overlapping region may be marked as a deactivated state, and different content items may be independently displayed on the cluster, the CID, and the PID.

When the request for display expansion has been made, the direction of the requested display expansion is determined with reference to the position of the driver's seat (1409). At this point, the direction of the requested expansion may be determined based on one of the following: the attributes of the content or services to be expanded, received driving information, or the position of the display receiving a request input.

When the direction of the requested expansion is toward the cluster 851a, that is, the driver's seat, the CID 851b operating in the landscape mode is additionally controlled to move horizontally in the direction of the front passenger seat, the is, in the direction of the PID 851c (1413). Accordingly, as an overlapping region of the cluster 851a gradually decreases, the display (i.e., the display region) of the cluster 851a is expanded (1414). When the CID 851b no longer overlaps the PID 851c, the horizontal movement of the CID 851b is terminated, and a content screen displayed on the CID 851b is expanded up to at least one portion of the cluster 851a (1415).

From FIG. 15A, it can be seen that, as the CID 851c positioned in the landscape mode horizontally moves (MR) in the direction of the front passenger seat, the overlapping region of the cluster 851a disappears, thereby expanding the display of the cluster 851a. At this point, the overlapping region of the PID 851c increases in proportion to the horizontal movement (MR) of the CID 851b.

When the direction of the requested expansion is toward the PID 851c, that is, the front passenger seat, the CID 851b operating in the landscape mode is additionally controlled to move horizontally in the direction of the driver's seat, that is, the cluster 851a (1416). Accordingly, as the overlapping region of the PID 851c gradually decreases, the display (i.e., the display region) of the PID 851c is expanded (1417). When the CID 851b no longer overlaps the PID 851c, the horizontal movement of the CID 851b is terminated, and a content screen displayed on the CID 851b is expanded up to at least one portion of the PID 851c.

From FIG. 16A, it can be seen that, as the CID 851b positioned in the landscape mode horizontally moves (ML) in the direction of the driver's seat, the overlapping region of the PID 851c disappears, thereby expanding the display of the PID 851c. At this point, the overlapping region of the cluster 851a increases in proportion to the horizontal movement (MR) of the CID 851b.

In some embodiments, after the CID 851b moves further in the horizontal direction for display expansion, the form factor of the plurality of displays may be further changed in such a manner that the expanded displays are structurally configured to be positioned along the same line in the horizontal direction.

Specifically, the control unit 880 of the vehicular display device 800 may select the expansion direction of the display based on the vehicle driving information. In addition, the control unit 880 may transfer, to the second display 851b, a first signal for causing relative movement of the second display 851b, that is, the CID 851b, in the horizontal direction opposite to the selected expansion direction. In response to the first control signal, the second display 851b moves in the horizontal direction, and then, an expanded screen is displayed across both the second display 851b and the display (e.g., the cluster 851a or the PID 851c), which is positioned in the direction of the expansion.

In response to a control signal from the control unit 880, the first display 851a is configured to undergo relative movement in the vertical direction, thereby changing exposure areas of displays thereof and varying screen sizes of the displays. This indicates that the first display 851a has a structural form similar to that of the third display 851c which operates to vary the size thereof in response to the control signal.

According to an embodiment, the relative movement in the vertical direction of the first display 851a and/or the third display 851c may be triggered by the movement in the horizontal direction of the second display 851b.

In addition, the control unit 880 may generate a second control signal and transfer the generated second control signal to the corresponding display. The second control signal serves to cause relative movement in the vertical direction of either the first display 851a or the third display 851c, each of which corresponds to the expansion direction of the display, after the second display 851b is driven (moved) in the horizontal direction in response to the first control signal. When driven (moved) in the vertical direction in response to the second control signal, either first display 851a or the third display 851c has the same height along the same line as the second display 851b. Accordingly, the expanded content is displayed more seamlessly.

With reference to FIG. 15B, after the CID 851b horizontally moves toward the PID 851c, the cluster 851a moves up (MU). As a result, an expanded screen is displayed in a state where the cluster 851a and the CID 851b are seamlessly connected as one large screen.

In addition, with reference to FIG. 16B, after the CID 851b horizontally moves toward the cluster 851a, the PID 851c moves up (MU). As a result, the expanded screen is displayed in a state where the CID 851b and the PID 851c are seamlessly connected as one large screen.

As described above, in the vehicular display device according to the embodiment of the present disclosure and the method of operating the vehicular display device, the form factor of the plurality of displays is changed into an optimal form in accordance with the driving situation of the vehicle, the needs of the occupant, and provided content or services. As a result, the driver's field of view can be ensured, and the usability of the infotainment system can be improved under various conditions. Furthermore, the form factor varies depending on the current driving mode of the vehicle, thereby providing an experience in which related content or services are delivered in an efficient and seamless format. In addition, an occupant in the front passenger seat does not need to request a display operation separately, and the driver and the occupant can operate their respective devices in conjunction with each other without causing interference. Moreover, in a case where the form factor transition causes overlap to occur among the plurality of displays, the occurrence of overlap can be immediately recognized, and seamless display expansion can be achieved through a change in structural form and through display balance.

The present disclosure may be implemented in the form of computer-readable code recorded on a program-recorded medium. The computer-readable media include all types of recording devices capable of storing data that are readable by a computer system. Examples of media readable by computers include hard disk drives (HDDs), solid-state disks (SSDs), silicon disk drives (SDDs), ROM, RAM, CD-ROM, magnetic tapes, floppy disks, optical data storage devices, and other similar media. In addition, these media may further include transmission media, such as waves (e.g., waves transmitted over the Internet). In addition, the computer may also include a controller or processor of a personal driving system. Therefore, the detailed description should not be interpreted in a limited manner in all respects and should be considered as serving the purpose of illustration. The scope of the present disclosure should be determined by the proper interpretation of the following claims. All equivalent modifications to the embodiments of the present disclosure fall within the scope of the present disclosure.

## Claims

1. A vehicular display device comprising:
a main body mountable on a dashboard of a vehicle;
a communication unit that receives vehicle driving information collected by a sensor of the vehicle;
a plurality of displays, formed on a front surface of the main body, that include a first display, a second display whose display has a variable direction, and a third display whose display has a variable screen size; and
a control unit that changes a form of at least one of the following: the first display, the second display, or the third display, in such a manner that a form factor of the plurality of displays varies,
wherein the control unit
recognizes the display direction of the second display that forms the form factor of the plurality of displays,
determines, based on the display direction of the second display, whether the second display is to overlap at least one of the following: the first display or the third display, and
displays a screen corresponding to the vehicle driving information on at least one of the plurality of displays by controlling display balance for at least one of the following: the first display or the third display, on the basis of the determination.

2. The vehicular display device of claim 1, wherein the second display is configured to undergo relative rotation with respect to the main body in response to a control signal from the control unit, thereby changing the display direction in accordance with an operation mode corresponding to either a landscape mode or a portrait mode, and
wherein, when a control signal for changing the form of at least one of the following: the first display, the second display, or the third display is generated, the control unit stores, in a memory, information about an operation mode corresponding to the display direction of the second display that forms the form factor of the plurality of displays.

3. The vehicular display device of claim 2, wherein, when an operation mode of the second display corresponds to the portrait mode, the control unit determines that one portion of the second display does not overlap the first display and the third display, and
wherein, when the operation mode of the second display corresponds to the landscape mode, the control unit determines that one portion of the second display overlaps at least one of the following: the first display or the second display, and controls display balance for an overlapping region, resulting from the overlap.

4. The vehicular display device of claim 3, wherein in a form factor in which the second display is positioned in the landscape mode, the control unit controls switching to a deactivated state in such a manner that a content screen is not displayed on overlapping regions of the first and third displays, which are caused by the second display.

5. The vehicular display device of claim 4, wherein the control unit performs control in such a manner that a screen corresponding to the vehicle driving information is displayed in an expanded format on at least one of the following: the first display or the second display, excluding the overlapping region thereof, and on the second display.

6. The vehicular display device of claim 1, wherein the control unit determines, based on a driving situation detected on the basis of the vehicle driving information, whether the display direction of the second display is to be changed, thereby varying the form factor, and
wherein the control unit determines whether overlapping regions are to be formed on the first display and the third display, respectively, by recognizing the display direction of the second display based on the determination.

7. The vehicular display device of claim 6, wherein the detected driving situation is either a lane change or parking operation of the vehicle, each of which is predicted on the basis of the received vehicle driving information, and
wherein the control unit performs display balance for the first display and the third display in such a manner that information associated with the detected driving situation is displayed in display regions thereof instead of the overlapping regions.

8. The vehicular display device of claim 7, wherein the control unit determines not to change the display direction of the second display based on a lane change predicted from the detected driving situation, and controls the display of a guide screen for the lane change, taking into consideration the overlapping regions of the first display and the third display, the overlapping regions being to be formed in response to the current display direction of the second display.

9. The vehicular display device of claim 8, wherein, on the basis of the vehicle driving information, the control unit recognizes a driving lane and a target lane that correspond to the current location of the vehicle, and
wherein, based on the current display direction of the second display, the control unit determines whether to expand the guide screen to at least one of the following: the first display or the third display.

10. The vehicular display device of claim 9, wherein in the state of the form factor in which the second display is positioned in a portrait mode, the control unit determines that the guide screen is to be expanded up to either the first display or the third display, each of which is positioned in a direction aligned with the target lane, and performs display balance in such a manner that the expanded guide screen is displayed as one screen including the driving lane and the target lane, which are connected to each other.

11. The vehicular display device of claim 9, wherein in a state of the form factor in which the second display is positioned in a landscape mode, by further considering information about a distance between the driving lane and the target lane, the control unit determines whether to expand the guide screen to at least one of the following: the first display or the third display.

12. The vehicular display device of claim 11, wherein, in the state of the form factor in which the second display is positioned in the landscape mode, when the distance between the driving lane and the target lane falls within a preset range, the control unit displays the guide screen on the second display, and
wherein, when the distance between the driving lane and the target lane exceeds the preset range, the control unit determines that the guide lane is to be expanded up to the display positioned in a direction corresponding to the target lane.

13. The vehicular display device of claim 7, wherein, when it is recognized, based on the detected driving situation, that the vehicle is being parked, the control unit selects a parking mode corresponding to an available parking space on the vehicle driving information, and determines whether to change the display direction of the second display, by recognizing the display direction of the second display that forms the form factor of the plurality of displays.

14. The vehicular display device of claim 13, wherein, in a case where the parking mode corresponds to a horizontal parking mode, the control unit controls the second display to form a form factor for a portrait mode, and controls the display of a guide screen for horizontal parking on the second display.

15. The vehicular display device of claim 13, wherein, in a case where the parking mode corresponds to a vertical parking mode, the control unit
controls the second display to form a form factor for a landscape mode,
displays a guide screen for horizontal parking on the second display, and
performs display balance in such a manner that related content is displayed on the first display and the second display, except for the overlapping regions thereof that overlap the second display.

16. The vehicular display device of claim 1, wherein the second display is structurally configured to undergo relative movement in a horizontal direction in a form factor state for a landscape mode, in response to a control signal, and
wherein, during display expansion of a screen corresponding to the vehicle driving information, the control unit recognizes a state of a form factor in which the second display is positioned in the landscape, and transfers, to the second display, a control signal for enabling the second display to undergo relative movement in the horizontal direction in such a manner as not to overlap at least one of the following: the first display or the third display.

17. The vehicular display device of claim 16, wherein the control unit
selects an expansion direction of a display based on the vehicle driving information,
transfers, to the second display, a first control signal for causing relative movement of the second display in a direction opposite to the selected expansion direction, and
controls the display of an expanded screen after driving the second display.

18. The vehicular display device of claim 17, wherein, in response to a control signal, the first display and the third display each are configured to undergo relative movement in a vertical direction, thereby changing exposure areas of displays thereof and varying screen sizes of the displays, and
wherein the control unit transfers a second control signal for causing relative movement in the vertical direction of either the first display or the third display, each of which corresponds to the expansion direction of the second display, after driving the second display in response to the first control signal, and displays the expanded screen seamlessly across the second display after driving the first display or the third display, each of which corresponds to the expansion direction of the display.

19. A method of operating a vehicular display device including a main body mountable on a dashboard of a vehicle, a communication unit that receives vehicle driving information collected by a sensor of the vehicle, a plurality of displays, formed on a front surface of the main body, that include a first display, a second display whose display has a variable direction, and a third display whose display has a variable screen size, and a control unit, the method comprising:
changing a form of at least one of the following: the first display, the second display, or the third display, in such a manner that a form factor of the plurality of displays varies;
recognizing the display direction of the second display that forms the form factor of the plurality of displays;
determining, based on the display direction of the second display, whether at least one portion of the second display is to overlap at least one of the following: the first display or the third display; and
displaying a screen corresponding to the vehicle driving information on at least one of the plurality of displays by controlling display balance for at least one of the following: the first display or the third display, on the basis of the determination.
